# EUROPÄISCHE PATENTSCHRIFT

(11) **EP 2 280 866 B1**
(45) Veröffentlichungstag und Bekanntmachung des Hinweises auf die Patenterteilung: **03.07.2013**
(21) Anmeldenummer: 09735269.4
(22) Anmeldetag: 23.04.2009
(51) Int. Cl.: B64C 9/16

(54) **TRAGFLÜGEL FÜR EIN LUFTFAHRZEUG**
WING FOR AN AIRCRAFT
VOILURE POUR AÉRONEF

(30) Priorität: 23.04.2008 US 47118; 23.04.2008 DE 102008020390
(43) Veröffentlichungstag der Anmeldung: 09.02.2011
(73) Patentinhaber: Airbus Operations GmbH, 21129 Hamburg (DE)
(72) Erfinder: DYCKRUP, Werner, 49429 Visbek (DE)
(74) Vertreter: Schatt, Markus F.
(86) Internationale Anmeldenummer: PCT/EP2009/002965
(87) Internationale Veröffentlichungsnummer: WO 2009/130026

(56) Entgegenhaltungen:
- EP-A- 1 857 359
- US-A- 2 526 929
- US-A1- 2006 022 093

## Beschreibung

Die vorliegende Erfindung betrifft einen Tragflügel eines Luftfahrzeugs, ein Hochauftriebssystem sowie ein Luftfahrzeug dem Hochauftriebssystem.

US 2006/0022093. A1 beschreibt eine Kopplungsvorrichtung zur lateralen Kopplung von Klappen eines Flügels eines Flugzeuges.

Tragflügel von Luftfahrzeugen, z.B. Tragflächenflugzeugen, weisen einen Hauptflügel mit zumindest einem gegenüber diesem verstellbaren aerodynamischen Körper jeweils mit einem aerodynamisch wirksamen Profil auf. Üblicherweise sind eine Mehrzahl von gegenüber dem Hauptflügel verstellbaren und quer zur Flügeltiefen-Richtung des Hauptflügels nebeneinander angeordneten aerodynamischen Körpern vorgesehen, so dass sich zwischen den einander zugewandten Enden der Außenschale oder zwischen den einander zugewandten Stirnseiten der aerodynamischen Körper ein aufgrund der Verstellung derselben variabler Spalt ausbildet. Die aerodynamischen Körper können Klappen wie z.B. Querruder, Spoiler oder Hochauftriebs-Klappen, oder auch Vorflügel oder Slats sein. Der Tragflügel weist üblicherweise ein Flügel-Tragwerk auf, an dem die aerodynamischen Körper in verstellbarer Weise angekoppelt sind. Das Flügel-Tragwerk bildet hierbei in Bezug zu den beweglichen Tragwerkskomponenten ein ortfestes System bzw. Bezugssystem.

Bei bekannten Tragflügeln mit Hochauftriebsklappen werden diese mit einer gleichgerichteten Bewegung zeitgleich verstellt, wobei ein nach unten gerichteter Klappenausschlag erfolgt. Aufgrund der Form des Hauptflügels werden die Hochauftriebsklappen nicht parallel zueinander verstellt, so dass sich die nebeneinander liegenden Stirnseiten der Hochauftriebsklappen relativ zueinander bewegen, wodurch sich die Größe bzw. Form des variablen Spaltes verändert. Befinden sich die Hochauftriebsklappen in einer Null-Grad-Stellung, bei der die Hochauftriebsklappen eingefahren sind, so können die gegenseitigen Abstände der Stirnseiten an den Vorder- und Hinterkanten und somit der Spalt sehr gering und annähernd gleich Null sind. Beim Ausfahren der Hochauftriebsklappen kann sich der zwischen den Hochauftriebsklappen entstehende Spalt in Abhängigkeit der Ausfahrposition oder des Verstellzustands der Hochauftriebsklappen deutlich vergrößern.

Bei einer Hochauftriebsklappe, die z.B. an einem äußeren, d.h. nahe dem Rumpf oder dem Flügelende gelegen ist, so dass deren Stirnseite neben einem Bauteil des Rumpfs oder einem Bauteil des Hauptflügels gelegen ist, ist ein Spalt zwischen dem Bauteil des Rumpfs oder des Hauptflügels vorhanden. Auch dieser Spalt ändert sich in seiner Größe und seiner Form in Abhängigkeit von dem Verstellzustand der Hochauftriebsklappe.

Ein solcher Spalt, insbesondere wenn dieser eine bestimmte Größe überschreitet, beeinträchtigt die aerodynamische Güte des Flügels, also der gesamten Tragwerksanordnung. Aus diesen Gründen ist es erstrebenswert, den besagten Spalt soweit wie möglich zu vermeiden oder zu verhindern.

Aus dem allgemeinen Stand der Technik sind Dichtungs-Vorrichtungen bekannt, welche die beweglichen Tragwerkskomponenten gegeneinander bzw. die bewegliche Tragwerkskomponenten gegen ein ortsfestes Strukturbauteil mittels spezieller, deformierbarer Dichtprofile abdichten. Die Grenzen eines solchen Abdichtungskonzeptes werden jedoch überschritten, wenn, wie oben erläutert, erhebliche Variationen in der Größe und Form des Spaltes auftreten. Eine effektive Spaltabdichtung kann in diesem Fall in ausreichender Güte nicht gewährleistet werden. Darüber hinaus führt die Deformation der Dichtprofile zu einer unerwünschten Veränderung der Kontur des aerodynamischen Profils im Spaltbereich, was ebenfalls von Nachteil ist.

Die Aufgabe der Erfindung ist, einen Tragflügel mit an diesem verstellbaren aerodynamischen Körpern sowie ein Hochauftriebssystem und ein Flugzeug mit einem solchen Tragflügel bereitzustellen, mit dem die Beeinträchtigung der aerodynamischen Eigenschaften aufgrund von an den aerodynamischen Körpern auftretenden Zwischenräumen oder Spalte minimiert wird.

Diese Aufgabe wird mit den Merkmalen der unabhängigen Ansprüche gelöst. Weitere Ausführungsformen sind in den auf diese rückbezogenen Unteransprüchen angegeben.

Erfindungsgemäß ist eine Spalt-Überbrückungsvorrichtung mit einem Schalenteil zur Überbrückung oder Überdeckung des Spalts zumindest in bestimmten Verstellbereichen des aerodynamischen Körpers bzw. der aerodynamischen Körper vorgesehen. Die Überbrückung oder Überdeckung oder zumindest teilweise Abdichtung des Spalts kann über einen weiten Verstellbereich der aerodynamischen Körper über eine stufenlose Verschiebung des Schalenteils der Spalt-Überbrückungsvorrichtung erfolgen, wodurch eine hervorragende Anpassung an unterschiedlichste Betriebsbedingungen erreicht werden kann. Ferner ist es möglich, die Spalt-Überbrückungsvorrichtung als Starrkörper, also mit geringer Elastizität auszubilden. Dabei kann die Gestalt des Schalenteils so ausgeführt sein, dass dieses sehr genau an die Kontur der Außenseite oder Innenseite der Schale des aerodynamischen Körpers mit relativ hoher Formgenauigkeit angepasst ist. Dadurch wird ein Tragflügel mit optimierten aerodynamischen Eigenschaften bereit gestellt.

Erfindungsgemäß sind vorgesehen: ein aerodynamischer Körper mit einer Spalt-Überbrückungsvorrichtung mit einem mit einem Schalenteil vorgesehen, das teleskopartig an der Außenhaut des aerodynamischen Körpers bewegbar ist; zwei derartige aerodynamische Körper, zwischen denen eine solche Spalt-Überbrückungsvorrichtung angeordnet ist sowie ein aerodynamischer Körper in Kobination mit einem Bauteil des Hauptflügels oder des Rumpfes des Flugzeugs, zwischen denen eine solche Spalt-Überbrückungsvorrichtung angeordnet ist.

Erfindungsgemäß ist insbesondere ein aerodynamischer Körper vorgesehen, der mittels einer Verstell-Vorrichtung gegenüber einem Hauptflügel eines Luftfahrzeugs verstellbar ist, wobei sich an einem seitlichen Ende ein aufgrund der Verstellung desselben variabler Spalt zwischen dem aerodynamischen Körper und einem weiteren aerodynamischen Körper oder einem Bauteil eines Rumpfes oder Hauptflügels ausbildet, aufweisend eine Spalt-Überbrückungsvorrichtung mit einem mit einem Schalenteil, das sich entlang des Spalts erstreckt und die Außenschale des aerodynamischen Körpers in Spannweiten-Richtung an dessen Stirnseite derart überlappt, dass das Schalenteil teleskopartig gegenüber diesem aerodynamischen Körper in Spannweiten-Richtung bewegbar ist. Aufgrund der Überlappung des Schalenteils mit der Außenhaut des aerodynamischen Körpers ergibt sich bei den verschiedenen Verstellzuständen der aerodynamischen Körpers eine günstige Gestaltung des Flügelprofils. Die Führung des Schalenteils bei dessen Relativ-Bewegung gegenüber der Außenhaut kann durch ein zumindest abschnittsweises formschlüssiges Zusammenwirken des Schalenteils mit der Außenhaut oder mittels einer Kopplungs-Vorrichtung erfolgen, die die Spalt-Überbrückungsvorrichtung mit dem aerodynamischen Körper koppeln.

Das Schalenteil kann außerhalb oder innerhalb der Außenhaut des aerodynamischen Körpers gelegen sein.

Generell kann an der Spalt-Überbrückungsvorrichtung eine Dichtungs-Vorrichtung aus einem in der Spannweiten-Richtung des aerodynamischen Körpers elastischen Material angeordnet sein. Dabei kann die Dichtungs-Vorrichtung an derjenigen Seite der Spalt-Überbrückungsvorrichtung angeordnet sein, die entgegengesetzt zu der Seite mit dem Überlappungsbereich gelegen ist, die dem Überlappungsbereich zugewandt ist. Alternativ oder zusätzlich kann die Dichtungs-Vorrichtung in Bezug auf die Kopplungs-Rippe an dem Schalenteil und an derjenigen Seite angeordnet sein, die nahe des Überlappungsbereichs gelegen ist. In diesen Fällen kann die Dichtungs-Vorrichtung insbesondere an den äußeren Rändern des Schaltenteils angebracht oder angeordnet sein.

Die Spalt-Überbrückungsvorrichtung kann eine mit dem Schalenteil verbundene Kopplungs-Rippe und eine Kopplungs-Vorrichtung zur Kopplung der Kopplungs-Rippe mit einem Strukturbauteil des aerodynamischen Körpers aufweisen.

Dabei kann die Kopplungs-Vorrichtung zur Kopplung der Kopplungs-Rippe an einem der aerodynamischen Körper zumindest zwei in Flügeltiefen-Richtung hintereinander angeordnete Lenker mit jeweils zwei Gelenken aufweisen, die den Lenker an den aerodynamischen Körper und die Kopplungs-Rippe anlenken. Die Lenker-Gelenke können insbesondere derart gestaltet sein, dass die Kopplungs-Rippe eine dreidimensional zu beschreibende Bewegung gegenüber dem aerodynamischen Körper ausführt.

Auch kann die Kopplungs-Vorrichtung zumindest ein sich quer zur Flügeltiefen-Richtung erstreckendes Verbindungsteil aufweisen, das über eine Gelenk-Verbindung an die Kopplungs-Rippe angekoppelt ist und das in seiner Längsrichtung zur Verschiebung des Schalenteils in Spannweiten-Richtung verlängerbar ist, wobei die Kopplungs-Rippe einen Anschluss zur Ankopplung einer zweiten Kopplungs-Vorrichtung auf der entgegen gesetzten Seite der Kopplungs-Rippe aufweist. Das Verbindungsteil verändert seine Länge insbesondere aufgrund einer Zugkraft, die bei der Verstellung der aerodynamischen Körper von der ersten Kopplungs-Vorrichtung ausgeübt wird.

Alternativ oder zusätzlich kann die Kopplungs-Vorrichtung eine Andrück-Vorrichtung zwischen einem tragenden Bauteil des aerodynamischen Körpers und der Kopplungs-Rippe aufweisen, so dass die Andrück-Vorrichtung die Spalt-Überbrückungsvorrichtung nach außen von dem Inneren des aerodynamischen Körpers weg drückt. Dabei kann die Andrück-Vorrichtung einen Teleskopstab aufweisen, der in Richtung zur Außenseite des aerodynamischen Körpers vorgespannt ist.

Insbesondere kann die Spalt-Überbrückungsvorrichtung auf einer ersten Seite die genannte Kopplungs-Vorrichtung mit gelenkig mit der Kopplungs-Rippe gekoppelten Lenkern und auf ihrer zweiten, entgegen gesetzt zur ersten Seite gelegenen Seite eine Längsverschiebung entlang der Außenhaut des aerodynamischen Körpers zulassen. Auf der zweiten Seite kann eine Kopplungs-Vorrichtung, die das in seiner Länge veränderbare Verbindungsteil aufweist, oder eine Kopplungs-Vorrichtung vorgesehen sein, die die Andrück-Vorrichtung aufweist. Im zweiten Fall kann die erste Kopplungs-Vorrichtung auch entfallen. Wenn auf der zweiten Seite eine Kopplungs-Vorrichtung mit einem in seiner Länge veränderbaren Verbindungsteil vorgesehen ist, ist die erste Kopplungs-Vorrichtung eine Gelenk-Verbindung zwischen dem ersten aerodynamischen Körper und der Kopplungs-Rippe.

Erfindungsgemäß ist weiterhin ein Tragflügel für ein Luftfahrzeug mit einem Hauptflügel und einer Mehrzahl von quer zur Flügeltiefen-Richtung nebeneinander angeordneten aerodynamischen Körpern vorgesehen, die mittels einer Verstell-Vorrichtung gegenüber dem Hauptflügel verstellbar sind, wobei sich zwischen den einander zugewandten Enden der Außenschale der aerodynamischen Körper ein aufgrund der Verstellung derselben variabler Spalt ausbildet und wobei zwischen den aerodynamischen Körpern eine Spalt-Überbrückungsvorrichtung nach der Erfindung angeordnet ist.

Die Spalt-Überbrückungsvorrichtung kann aufweisen:
- das Schalenteil, das sich am Spalt zumindest abschnittsweise entlang der Kontur der Außenschalen der aerodynamischen Körper erstreckt,
- die mit dem Schalenteil verbundene Kopplungs-Rippe,
- eine erste Kopplungs-Vorrichtung zur gelenkigen Kopplung der Kopplungs-Rippe an einen ersten der aerodynamischen Körper und
- eine zweite Kopplungs-Vorrichtung zur gelenkigen Kopplung der Kopplungs-Rippe an einem neben dem ersten aerodynamischen Körper gelegenen zweiten aerodynamischen Körper.

Dabei kann die erste Kopplungs-Vorrichtung aus zwei in Spannweiten-Richtung nebeneinander angeordneten Lenker-Verbindungen gebildet sein und die zweite Kopplungs-Vorrichtung eine Bewegung des Schalenteils gegenüber dem aerodynamischen Körper mit einer Translations-Komponente zulassen. Dazu kann die zweite Kopplungs-Vorrichtung aus dem in Spannweiten-Richtung verlängerbaren Verbindungsteil gebildet sein, das in seiner Längsrichtung am zweiten aerodynamischen Körper geführt ist. Alternativ dazu kann die zweite Kopplungs-Vorrichtung eine Andrück-Vorrichtung zwischen einem tragenden Bauteil des zweiten aerodynamischen Körpers und der Kopplungs-Rippe aufweisen, so dass die Andrück-Vorrichtung die Spalt-Überbrückungsvorrichtung nach außen von dem Inneren des zweiten aerodynamischen Körpers weg drückt.

Bei dem erfindungsgemäßen Tragflügel kann vorgesehen sein, dass auf dem ersten aerodynamischen Körper und dem zweiten aerodynamischen Körper jeweils eine teleskopartig auf dieser bewegbare Spalt-Überbrückungsvorrichtung mit einer Kopplungs-Vorrichtung angeordnet ist, die eine Andrück-Vorrichtung zwischen einem tragenden Bauteil des zweiten aerodynamischen Körpers und der Kopplungs-Rippe aufweist.

Weiterhin ist nach der Erfindung ein Tragflügel für ein Luftfahrzeug mit einem Hauptflügel und einer gegenüber diesem mittels einer Verstell-Vorrichtung verstellbaren und quer zur Flügeltiefen-Richtung neben einem Bauteil des Rumpfs oder des Hauptflügels angeordneten aerodynamischen Körper mit einem aerodynamisch wirksamen Profil vorgesehen, wobei sich zwischen einem Enden der Außenschale des aerodynamischen Körpers und dem Bauteil des Rumpfs oder des Hauptflügels ein aufgrund der Verstellung derselben variabler Spalt ausbildet, aufweisend eine Spalt-Überbrückungsvorrichtung, aufweisend eine Spalt-Überbrückungsvorrichtung (1) nach einem der Ausführngsbeispiele der Erfindung.

Erfindungsgemäß kann dabei die Spalt-Überbrückungsvorrichtung aufweisen:
- das Schalenteil, das sich am Spalt zumindest abschnittsweise entlang der Kontur der Außenschalen der aerodynamischen Körper erstreckt,
- die mit dem Schalenteil verbundene Kopplungs-Rippe,
- eine erste Kopplungs-Vorrichtung zur gelenkigen Kopplung der Kopplungs-Rippe an einen den aerodynamischen Körper und
- eine zweite Kopplungs-Vorrichtung zur gelenkigen Kopplung der Kopplungs-Rippe an das Bauteil.

Die erste oder zweite Kopplungs-Vorrichtung kann aus zwei in Spannweiten-Richtung nebeneinander angeordneten Lenker-Verbindungen gebildet sein.

Weiterhin kann vorgesehen sein, dass die erste oder zweite Kopplungs-Vorrichtung aus dem in Spannweiten-Richtung verlängerbaren Verbindungsteil gebildet ist, das in seiner Längsrichtung am zweiten aerodynamischen Körper oder am Bauteil geführt ist.

Weiterhin kann bei der Anordnung eines aerodynamischen Körpers an einem Bauteil des Rumpfes oder des Hauptflügels auf dem ersten aerodynamischen Körper und dem Bauteil jeweils eine teleskopartig auf dieser bewegbare Spalt-Überbrückungsvorrichtung mit einer Kopplungs-Vorrichtung angeordnet sein, die eine Andrück-Vorrichtung zwischen einem tragenden Bauteil des zweiten aerodynamischen Körpers und der Kopplungs-Rippe aufweist.

Die zweite Kopplungs-Vorrichtung kann eine Andrück-Vorrichtung zwischen einem tragenden Bauteil des Bauteils oder des aerodynamischen Körpers und der Kopplungs-Rippe aufweisen, so dass die Andrück-Vorrichtung die Spalt-Überbrückungsvorrichtung nach außen von dem Inneren des aerodynamischen Körpers oder des Bauteils weg drückt.

Weiterhin ist nach der Erfindung auch ein Luftfahrzeug mit einem Tragflügel nach einer der genannten Ausführungsformen vorgesehen.

Unter Spannweiten-Richtung der aerodynamischen Körper wird insbesondere die Verbidnungsleinie aller Schwerpunkte der Querschnitts-Flächen des jeweiligen aerodynamischen Körpers verstanden, wobei die Querschnitt-Flächen insbesondere so gewählt sein können, dass diese sich entlang der Flugzeug-Längsachse erstrecken, wen der jeweiligen aerodynamische Körper in der eingefahrenen Stellung ist.

Mit dem erfindungsgemäßen Luftfahrzeug sind im Wesentlichen die gleichen Vorteile zu erzielen, die bereits weiter oben in Zusammenhang mit den erfindungsgemäßen Anordnungen erläutert wurden.

Im Folgenden werden Ausführungsbeispiele der Erfindung an Hand der beiliegenden Figuren beschrieben, die zeigen:
- Figur 1 in einer schematischen Perspektiv-Darstellung zwei aerodynamische Körper als Teil eines Tragflügels mit der erfindungsgemäßen Spalt-Überbrückungsvorrichtung, wobei die aerodynamischen Körper, eine Dichtungs-Vorrichtung sowie die Spalt-Überbrückungsvorrichtung in einer teilweise aufgeschnittenen Form gezeigt sind, bei der Außenhaut nicht dargestellt ist;
- Figur 2 eine Detailansicht eines Bereichs der Figur 1 in der Darstellungsweise derselben;
- Figur 3 eine Detailansicht eines Bereichs der Figur 1, wobei die Dichtungs-Vorrichtung nicht in einer aufgeschnittenen Form dargestellt ist und wobei sich die aerodynamischen Körper in einer relativ zusammen gefahrenen Lage befinden;
- Figur 4 die Darstellung der Figur 3, wobei sich die aerodynamischen Körper in einer relativ auseinander gefahrenen Lage befinden;
- Figur 5 die Kombination von zwei aerodynamischen Körpern mit der Dichtungs-Vorrichtung und der Spalt-Überbrückungsvorrichtung schräg von oben gesehen in einer nicht aufgeschnittenen Darstellung, wobei die aerodynamischen Körper in einem auseinander gefahrenen Zustand dargestellt sind;
- Figur 6 eine schematische halb-aufgeschnittene in etwa in Flügeltiefen-Richtung erfolgte Rückansicht der aerodynamischen Körper in dem auseinander gefahrenen Zustand der Figur 5;
- Figur 7 die aerodynamischen Körper in der Darstellung der Figur 5 in einem zusammen gefahrenen Zustand;
- Figur 8 die aerodynamischen Körper in der Darstellung der Figur 6 in einem auseinander gefahrenen Zustand
- Figur 9 eine Detailansicht eines weiteren Ausführungsbeispiels der Kombination von zwei aerodynamischen Körpern mit einer Spalt-Überbrückungsvorrichtung und einer Dcihtungs-Vorrichtung sowie einer Verbindungsstrebe, die einen aerodynamischen Körper mit der Spalt-Überbrückungsvorrichtung verbindet;
- Figur 10 einen Schnitt durch ein weiteres Ausführungsbeispiel einer Kombination zweier aerodynamischer Körper in einer ersten Lage zueinander;
- Figur 11 die Darstellung des Ausführungsbeispiels einer Kombination zweier aerodynamischer Körper der Figur 10 in einer zweiten Lage zueinander;
- Figur 12 eine Schnittdarstellung eines weiteren Ausführungsbeispiels einer Kombination zweier aerodynamischer Körper von oben, also in Flügeldicken-Richtung gesehen;
- Figur 13 eine Schnittdarstellung des Ausführungsbeispiels der Figur 12 in flügeltiefen-Richtung gesehen;
- Figur 14 eine perspektivische Darstellung einer Realisierungsform der Ausführungsformen gemäß den Figuren 1 bis 10;
- Figur 15 ein vergrößerter Ausschnitt der Darstellung der Figur 14;
- Figur 16 eine perspektivische Darstellung eines weiteren Ausführungsbeispiels eines aerodynamischen Körpers oder einer Klappe, die zur Anordnung an ein in Bezug zu der Klappe ortsfesten Strukturbauteils (nicht gezeigt) bestimmt ist;
- Figur 17 der aerodynamischen Körper der Figur 16 in einer teilweise aufgeschnittenen Darstellungsweise aus einer anderen Perspektive;
- Figur 18 eine schematische perpektivische Darstellung einer Anordnung von drei aerodynamischen Körpern.

In der nachfolgenden Beschreibung und in den Figuren werden Funktions-ähnliche Bauteile oder Komponenten teilweise gleiche Bezugszeichen verwendet.

Nach einem Ausführungsbeispiel der Erfindung ist ein Tragflügel für ein Luftfahrzeug mit einem Hauptflügel und einer Mehrzahl von gegenüber diesem verstellbaren und quer zur Flügeltiefen-Richtung S1 nebeneinander angeordneten aerodynamischen Körpern A1, A2 jeweils mit einem aerodynamisch wirksamen Profil vorgesehen, die an einer Verstell-Vorrichtung mit einer Führungsvorrichtung des Hauptflügels gehalten werden und verstellbar sind. Zwischen den einander zugewandten Enden der Außenschale der aerodynamischen Körper A1, A2 ist ein Spalt S ausgebildet, dessen Größe und Form vom Verstellzustand der aerodynamischen Körper A1, A2 am Hauptflügel abhängt und insofern variabel ist. Die aerodynamischen Körper A1, A2 weisen eine Spalt-Überbrückungsvorrichtung 1 zur zumindest teilweisen aerodynamischen Überbrückung oder Abdeckung des Spalts S auf.

Bei einem weiteren Ausführungsbeispiel der Erfindung ist ein am Rumpf eines Luftfahrzeugs angebrachter Tragflügel mit einem Hauptflügel und ein gegenüber diesem verstellbaren und quer zur Flügeltiefen-Richtung S1 neben einem Bauteil des Rumpfs oder des Hauptflügels angeordneter aerodynamischer Körper mit einem aerodynamisch wirksamen Profil vorgesehen. Der aerodynamische Körper ist wie bei dem zuvor beschriebenen Ausführungsbeispiel mittels einer Verstell-Vorrichtung am Hauptflügel verstellbar angeordnet und hat grundsätzlich den gleichen Aufbau und die gleiche Funktion wie die aerodynamischen Körper des voranstehend genannten Ausführungsbeispiels. Der aerodynamische Körper ist mittels einer Verstell-Vorrichtung mit einer Führungsvorrichtung am Hauptflügel geführt, so dass dieser gegenüber oder am Hauptflügel und/oder dem Bauteil des Rumpfs oder des Hauptflügels verstellt werden kann. Das Bauteil des Rumpfes kann z.B. ein Bauteil des Anschlussbereichs des Rumpfes für die Befestigung des Hauptflügels sein. Das Bauteil des Hauptflügels kann dabei ein Teil des Flügel-Endbereichs oder der Flügelspitze sein. Zwischen einem Ende der Außenschale des aerodynamischen Körpers und dem Bauteil des Rumpfs oder Hauptflügels bildet sich ein aufgrund der Verstellung derselben variabler Spalt S ausbildet, dessen Größe und Form vom Verstellzustand des aerodynamischen Körpers abhängt und insofern variabel ist. Der aerodynamische Körper weist eine Spalt-Überbrückungsvorrichtung 1 zur zumindest teilweisen aerodynamischen Überbrückung oder Abdeckung des Spalts S auf.

Die erfindungsgemäße Spalt-Überbrückungsvorrichtung 1 ist zur Überbrückung und aerodynamischen Beeinflussung der Strömung an einem Spalt vorgesehen, der zwischen zwei genannten verstellbaren aerodynamischen Körpern A1, A2 und/oder zwischen einem verstellbaren aerodynamischen Körper und einem gegenüber diesem am Flugzeug-Rahmen ("airframe") auftritt. Der Spalt zwischen zwei aerodynamischen Körpern A1, A2 oder zwischen einem aerodynamischen Körper und einem genannten Bauteil erstreckt sich jeweils quer zur Spannweiten-Richtung SW1, SW2 des jeweiligen aerodynamischen Körpers A1, A2.

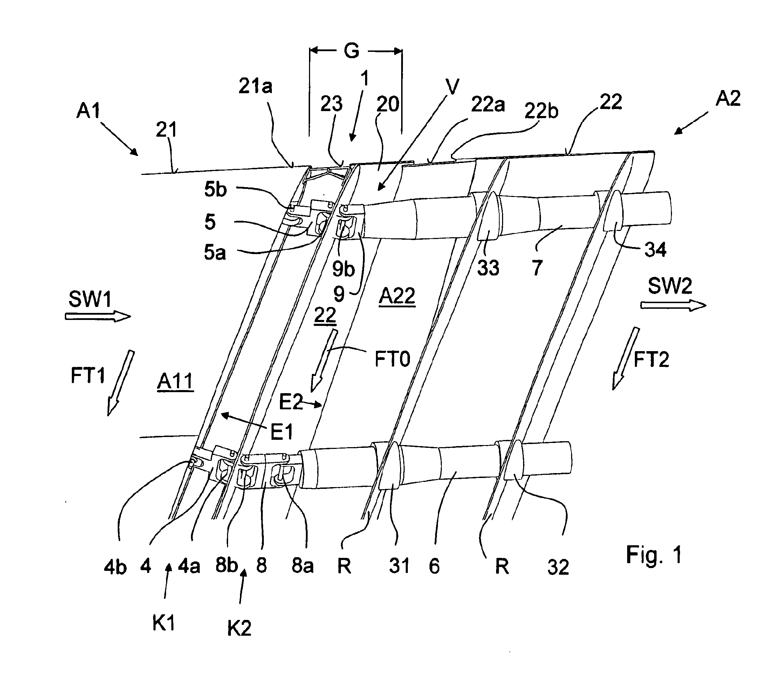

Die Darstellung der Figur 1 bezieht sich auf die Ausführungsform der Erfindung mit einer Mehrzahl von gegenüber dem Hauptflügel verstellbaren und quer zur Flügeltiefen-Richtung S1 nebeneinander angeordneten aerodynamischen Körpern A1, A2, die mit einer Verstell-Vorrichtung und/oder Führungsvorrichtung an den Hauptflügels zwischen Verstell-Zuständen verstellbar gekoppelt sind. In der Figur 1 ist in einer schematischen, perspektivischen und teilweise aufgeschnittenen Darstellung ein Ausschnitt einer Ausführungsform einer Kombination von zwei aerodynamischen Körpern A1, A2 als Teil eines Tragflügels (nicht gezeigt) und gegenüber dem Hauptflügel oder Flügel des gesamten Tragflügels verstellbare aerodynamischen Körper gezeigt. Die aerodynamischen Körper A1, A2 weisen jeweils eine Außenhaut 21 bzw. 22 auf, die jeweils ein aerodynamisch wirksames Profil bilden, mit denen die aerodynamischen Körper A1, A2 wiederum einen Teil eines variablen aerodynamischen Gesamtprofils des Tragflügels bilden. Der Tragflügel ist im gezeigten Ausführungsbeispiel Teil eines Tragflächen-Flugzeugs und kann jedoch generell Teil eines Luftfahrzeugs sein. In dem in der Figur 1 dargestellten Ausführungsbeispiel sind die aerodynamischen Körper A1, A2 als eine erste Landeklappe A1 bzw. eine zweite Landeklappe A2 gestaltet, die nachfolgend weiterhin als aerodynamischer Körper bezeichnet werden.

Die aerodynamischen Körper A1, A2 mit den Spannweiten-Richtungen SW1 bzw. SW2 sind derart angeordnet, dass sich zumindest in bestimmten Bereichen der VerstellZustände derselben ein zwischen den aerodynamischen Körpern A1, A2 gelegener und sich quer zu den Spannweiten-Richtungen SW1, SW2 erstreckender Spalt G ergibt, der zwischen einander zugewandten Enden E1 bzw. E2 oder Stirnseiten der aerodynamischen Körper A1, A2 gelegen ist. An diesen einander zugewandten Stirnseiten haben die aerodynamischen Körper A1, A2 zumindest an ihrer Oberseite oder ihrer Unterseite eine ähnliche Querschnittskontur, d.h. Querschnittskonturen, die nicht zu stark voneinander abweichen.

Die Verstell-Vorrichtung zur Verstellung der aerodynamischen Körper A1, A2 kann mit einem Drehgelenk ("dropped hinge") oder einer Führungsbahn realisiert sein. Der Verstellwinkel der aerodynamischen Körper A1, A2 kann dabei z.B. in einem Bereich zwischen Null Grad (voll eingefahren) und 40 Grad (voll ausgefahren) liegen. Die Verstellung der aerodynamischen Körper A1, A2 erfolgt mittels einer nicht dargestellten Verstell-Vorrichtung, die insbesondere derart gestaltet sein können, dass die aerodynamischen Körper A1, A2 jeweils gleichgerichtet ausgehend von einem Ausgangszustand nach oben oder unten verschwenkt oder gefahren werden.

Der Tragflügel und die aerodynamischen Körper A1, A2 können insbesondere derart gestaltet sein, dass sich die Spannweiten-Richtungen SW1, SW2 der aerodynamischen Körper A1, A2 in derselben Richtung erstrecken, wenn sich die aerodynamischen Körper A1, A2 in ihrer eingefahrenen Stellung befinden. Weiterhin können sich in diesem Ausführungsbeispiel die Spannweiten-Richtungen der aerodynamischen Körper auch bei den Ausfahr-Zuständen in derselben Richtung oder in unterschiedlichen Richtungen zueinander (Figur 19) erstrecken. In anderen Anwendungsfällen ändern sich die Spannweiten-Richtungen relativ zueinander, wenn die aerodynamischen Körper gleichgerichtet ein- oder ausgefahren werden. Insbesondere in diesen Fällen ändert sich die Größe und Gestalt des Spalts G mit einer Änderung der Verstellzustände, d.h. der Ein- oder Ausfahrzustände der aerodynamischen Körper. Dabei können sich auch die einander zugewandten Seitenflächen oder Stirnseiten der aerodynamischen Körper A1, A2 relativ zueinander und aufeinander zu bzw. voneinander weg bewegen. Weiterhin kann die Anordnung der aerodynamischen Körper A1, A2 am Hauptflügel derart vorgesehen sein, dass die einander zugewandten Seitenflächen der aerodynamischen Körper relativ zueinander gekippt oder gedreht werden. Die Relativbewegung der aerodynamischen Körper A1, A2 bei deren Verstellung kann also eine sowohl translatorische und/oder rotatorische Komponente haben.

Die aerodynamischen Körper A1, A2 können in verschiedener Weise aufgebaut sein und z.B. eine Rippen-Bauweise und/oder eine Schaumschicht und/oder eine Wabenschicht aufweisen. Bei der Ausführungsform, die in der fiur 1 dargestellt ist, sind die aerodynamischen Körper A1, A2 in einer rippenbauweise hergestellt. Der im aufgeschnitten Zustand dargestellte zweite aerodynamische Körper A2 ist in der Figur 1 mit zwei Verstärkungsrippen oder Rippen R dargestellt. Anstelle der Rippen R oder zusätzlich zu diesen kann z.B. auch eine Kernschicht aus Schaum oder Waben oder dergleichen vorgesehen sein. Dies Rippen R sind mit einer das aerodynamische Außenprofil der Klappe 2 begrenzenden Haut 8 beplankt, so dass sich ein leichtgewichtiger Hohlkörper ergibt.

Der erste aerodynamische Körper A1 weist einen äußeren, dem weiteren aerodynamischen Körper A2 zugewandten Abschnitt A11 mit der Außenhaut 21 a auf. Auch der zweite aerodynamische Körper A2 weist einen äußeren, dem ersten aerodynamischen Körper A1 zugewandten Abschnitt A22 mit der Außenhaut 22a auf.

Die Spalt-Überbrückungsvorrichtung 1 ist aus einem Schalenteil 2 und einer Kopplungs-Rippe 3 gebildet, die mit dem Schalenteil 2 verbunden ist und entlang der Innenseite, d.h. der zum Inneren oder zu den Profilsehnen der aerodynamischen Körper A1, A2 hin gerichteten Seite verlaufen. Generell ist die Form der Außenhaut 20 der Spalt-Überbrückungsvorrichtung 1 ähnlich der Form der Außenhäute 21a, 22a der äußeren Abschnitte A11 bzw. A22 der aerodynamischen Körper A1 bzw. A2, so dass die Außenhäute der Kombination aus den nebeneinander liegenden aerodynamischen Körpern und der Spalt-Überbrückungsvorrichtung 1 zusammen ein möglichst einheitliches aerodynamisches Profil ergeben. Dieses möglichst einheitliche aerodynamische Profil ist bei einem Ausführungsbeispiel möglichst bei allen Verstellzuständen der aerodynamischen Körper A1, A2 am Hauptflügel gegeben.

Die Kopplungs-Rippe 3 selbst kann in verschiedener Weise gestaltet sein. Dabei kann die Kopplungs-Rippe 3 z.B. als durchgängige, entlang der Flügeltiefen-Richtung FT0 an dem Schalenteil 20 anliegende Rippe, wie sie in der Figur 1 dargestellt ist, oder als ein oder eine Mehrzahl von Verstärkungsbeschlägen gestaltet sein.

Das Schalenteil 2 und die Kopplungs-Rippe 3 können ein einteiliges oder einstückiges und insbesondere einstückig hergestelltes Bauteil bilden. Die Spalt-Überbrückungsvorrichtung 1 und insbesondere das Schalenteil 2 und/oder die Kopplungs-Rippe 3 sind aus einem für den Anwendungsfall geeigneten Material, z.B. aus Leichtmetall oder einem Faserverbund-Material hergestellt. Das Schalenteil 2 kann insbesondere als streifenförmiges Schalen-Bauteil ausgebildet sein, wie dies in der in der Figur 1 geezeigten Ausführungsform dargestellt ist. Die Längsrichtung des Schalenteils 2 verläuft quer zu den Spannweiten-Richtungen SW1, SW2 der aerodynamischen Körper A1, A2 und kann insbesondere in der Flügeltiefen-Richtung FT1, FT2 einer der aerodynamischen Körper A1, A2 verlaufen. Die Längsrichtung der Kopplungs-Rippe 2 verläuft ebenfalls quer zu den Spannweiten-Richtungen SW1, SW2 der aerodynamischen Körper A1, A2 und kann insbesondere in der Flügeltiefen-Richtung einer der aerodynamischen Körper A1, A2 verlaufen. Die Kopplungs-Rippe 3 kann mittig entlang der Innenseite verlaufen. Alternativ kann die Kopplungs-Rippe 3 auch entlang eines der Ränder des Schalenteils 20 verlaufen, so dass die Kopplungs-Rippe 3 in einer der Spannweiten-Richtungen SW1, SW2 gesehen kappenartigen Abschluss der Spalt-Überbrückungsvorrichtung 1 bildet.

Auch können zwei oder mehr als zwei Kopplungs-Rippen 3 mit jeweils einem Schalenteil 20 verbunden sein. Dabei kann insbesondere vorgesehen sein, dass jeweils eine Kopplungs-Rippe 3 oder eine Mehrzahl von Kopplungs-Rippen entlang der in Längsrichtung des Schalenteils 20 verlaufenden Ränder desselben angebracht sind.

Bei der in der Figur 1 dargestellten Ausführungsform der Spalt-Überbrückungsvorrichtung 1 bildet das Schalenteil 20 eine in Flügeltiefen-Richtung FT0 der Spalt-Überbrückungsvorrichtung 1 verlaufende Umfangsrichtung geschlossene Profilform. Das Schalenteil 20 muss sich jedoch nicht über die gesamte Profiltiefe des jeweiligen aerodynamischen erstrecken. Je nach Anwendungsfall kann die Endkappe 12 auch nur in Teilbereichen in der Profiltiefe gesehen. Vorzugsweise kann dies in Teilbereichen vorgesehen sein, in denen bei einer Verstellung des jeweiligen aerodynamischen Körpers erhebliche Änderungen der Größe und der Form des variablen Spaltes G auftreten. In Bereichen, in denen nur geringe Änderungen auftreten, kann das Schalenteil 20 auch mit konventionellen Spaltdichtungen zusammenwirken bzw. mit diesen kombiniert werden

Die Außenhaut 20 der Spalt-Überbrückungsvorrichtung 1 ist vorzugsweise als kontinuierliche Haut ausgeführt. Diese kann jedoch auch Öffnungen aufweisen, insbesondere um vorteilhafte aerodynamische Effekt zu erzielen.

Die aerodynamischen Körper A1, A2 und die Spalt-Überbrückungsvorrichtung 1 können insbesondere derart gestaltet sein, dass sich einer oder beide der aerodynamischen Körper A1, A2, zumindest innerhalb eines bestimmten Verstell-Zustandsbereichs der aerodynamischen Körper gegenüber dem Hauptflügel, überlappen. Die Anordnung der aerodynamischen Körper A1, A2 und der Spalt-Überbrückungsvorrichtung 1 kann insbesondere derart gewählt sein, dass die Außenhaut 20 der Spalt-Überbrückungsvorrichtung 1 die Außenhäute der aerodynamischen Körper A1, A2 in deren gesamten Verstellbereichen überlappt.

Die Überlappung kann dabei so gestaltet sein, dass das Schalenteil 20 innerhalb oder außerhalb des Endabschnitts A11, A22 des jeweiligen aerodynamischen Körpers A1, A2 gelegen ist. Bei einer Ausführungsform der Erfindung, bei der in einem solchen Überlappungsbereich das Schalenteil außerhalb des jeweiligen Endabschnitts A11, A22 gelegen ist, ist die Spalt-Überbrückungsvorrichtung 1 an dieser ihrer beiden oder an ihren beiden in der Spannweiten-Richtung SW1, SW2 der aerodynamischen Körper A1, A2 weisenden Seiten offen, so dass das Schalenteil 20 der Spalt-Überbrückungsvorrichtung 1 die Außenhäute 21, 22 der aerodynamischen Körper A1 bzw. A2 umgibt und die Außenhaut 21a, 22a des Endabschnitts A11, A22 des jeweiligen aerodynamischen Körpers A1, A2 teleskopartig in das Schalenteil 20 ein-und ausgefahren werden kann, wenn sich, gegebenenfalls in entsprechenden Verstellzustands-Bereichen, die aerodynamischen Körper A1, A2 bei deren Verstellung relativ zueinander bewegen. Bei einer weiteren Ausführungsform der Erfindung ist, bei einer Überlappung von Schalenteil 20 und Außenhäuten 21, 22 gegebenenfalls in entsprechenden Verstellzustands-Bereichen, das Schalenteil 20 der Spalt-Überbrückungsvorrichtung 1 innerhalb der Außenhäute 21 a, 22a oder innerhalb einer der Außenhäute 21 a, 22a der Endbereiche der aerodynamischen Körper A1 bzw. A2 gelegen, so dass das Schalenteil 20 in die Außenhaut 21a, 22a des Endabschnitts A11, A22 des jeweiligen aerodynamischen Körpers A1, A2 teleskopartig ein- und ausgefahren werden kann, wenn sich die aerodynamischen Körper A1, A2 bei deren Verstellung relativ zueinander bewegen.

Das Schalenteil 20 und/oder das Ende E1, E2 des jeweiligen aerodynamischen Körpers A1, A2 können auch so gestaltet sein, dass das Schalenteil 20 nicht überlappbar mit einer Außenhaut eines areodynamischen Körpers A1, A2 ist und die Spalt-Überbrückungsvorrichtung 1 nicht in die Außenhaut 21, 22 eines oder beider der Außenhäute 21, 22 einfahrbar ist oder umgekehrt.

An Überlappungsbereichen, an denen das Schalenteil 20 eine Außenhaut oder beide Außenhäute 21a, 22a der äußeren Abschnitte A11 bzw. A22 umgibt, können die äußeren Abschnitte A11 bzw. A22 oder kann einer dieser äußeren Abschnitte nach innen, also zur Profilsehne des jeweiligen Körpers A1 bzw. A2 hin versetzt sein. Der Übergang von dem jeweiligen äußeren Abschnitt A11 bzw. A22 zu dem von der Spalt-Überbrückungsvorrichtung 1 aus gesehen weiter entfernt gelegenen Abschnitt kann durch eine Stufe 21 b, 22b oder einen rampenförmig verlaufenden Abschnitt gebildet sein. Dadurch kann die Außenhaut 20 des Schalenteils 2 von der jeweiligen Profilsehne aus gesehen außerhalb der Außenhäute 21 a, 22a der äußeren Abschnitte A11 bzw. A22 angeordnet sein. Dabei kann vorgesehen sein, dass die Innenseite der Außenhaut 20 der Spalt-Überbrückungsvorrichtung 1 an den Außenflächen der Außenhäute 21a, 22a der äußeren Abschnitte A11 bzw. A22 anliegt und bei Verstellung der aerodynamischen Körper A1, A2 an diesen gleitet.

Bei einem weiteren Ausführungsbeispiel sind ein Überlappungsbereich zwischen der Außenhaut 21 a des äußeren Abschnitts A11 des ersten aerodynamischen Körpers A1 und der Außenhaut 20 der Spalt-Überbrückungsvorrichtung 1 sowie ein Überlappungsbereich zwischen der Außenhaut 22a des äußeren Abschnitts A22 des zweiten aerodynamischen Körpers A2 und der Außenhaut 20 der Spalt-Überbrückungsvorrichtung 1 vorgesehen. In einer anderen Ausführungsform kann die Außenhaut 20 der Spalt-Überbrückungsvorrichtung 1 von den Profilsehnen der aerodynamischen Körper A1, A2 aus gesehen innerhalb derselben gelegen sein. In einer weiteren Ausführungsform kann die Außenhaut 20 der Spalt-Überbrückungsvorrichtung 1 auf einer Seite innerhalb der Außenhaut eines aerodynamischen Körpers, d.h. näher in Richtung zu den Profilsehnen der aerodynamischen Körper A1, A2, und auf der anderen Seite außerhalb der Außenhaut des jeweils anderen aerodynamischen Körpers gelegen sein.

Bei dem weiteren Ausführungsbeispiel, bei dem das Schalenteil 20 der zwischen den aerodynamischen Körpern A1, A2 gelegenen Spalt-Überbrückungsvorrichtung 1 außerhalb der Außenschalen 21 a, 22a der einander zugewandten äußeren Endabschnitte A11, A22 der aerodynamischen Körper A1, A2 gelegen ist, können die aerodynamischen Körper A1, A2 als seitlich offene Hohlprofile gebildet sein, so dass die Spalt-Überbrückungsvorrichtung 1 die einander zugewandten Enden E1 bzuw. E2 der aerodynamischen Körper A1, A2 abdeckt und bei entsprechender Ausführung der Spalt-Überbrückungsvorrichtung 1 auch verschließen kann. Das Schalenteil 20 der Spalt-Überbrückungsvorrichtung 1 ist insbesondere hinsichtlich seiner Formgebung mit einem leichten Spiel an die Schalenteile 21 a, 22a der aerodynamischen Körper A1 bzw. A2 angepasst, d.h. im dargestellten Ausführungsbeispiel ist die innere Konturfläche des Schalenteils 20 ähnlich oder in etwa so gestaltet wie die äußeren Konturflächen der Außenhäute 21 a, 22a.

Bei einer anderen Ausführungsform kann das Schalenteil 20 der Spalt-Überbrückungsvorrichtung 1 zwischen den Außenhäuten 21, 22 der aerodynamischen Körper A1, A2 gelegen sein, so dass sich zwischen den in Spannweitenrichtung SW1, SW2 gerichteten Enden der Außenhäute 21, 22 der aerodynamischen Körper A1, A2 und dem Schalenteil 20 der Spalt-Überbrückungsvorrichtung 1 ein Zwischenspalt ergibt (nicht gezeigt). Ein solcher Zwischenspalt kann sich auch nur zwischen dem Schalenteil 20 und nur einer der Außenhäute 21a oder 22a ausbilden. Die genannten Zwischenspalte können auch nur bei bestimmten Verstell-Zustandsbereichen der aerodynamischen Körper A1, A2 auftreten. Bei einer Anordnung der aerodynamischen Körper A1, A2 am Hauptflügel, bei der sich der Spalt G zwischen den Außenhäuten 21, 22 der aerodynamischen Körper A1, A2 bei deren Verstellung verändert, verändern sich somit auch die Zwischenspalte.

Insbesondere bei einer Ausführungsform der Erfindung, bei der sich zumidnest ein Zwischenspalt ausbildet kann an dem in Spannweitenrichtung zeigenden Ende eines der aerodynamischen Körper oder an den Enden beider aerodynamischer Körper A1, A2 ein elastisches Band oder eine Dichtungsvorrichtung (nicht gezeigt) angeordnet sein, das bzw. die insbesondere derart gestaltet und angeordnet ist, dass das Schalenteil 20 der Spalt-Überbrückungsvorrichtung 1 zumindest in einem Verstellbereich der aerodynamischen Körper A1, A2 an dem Band oder der Dichtungsvorrichtung anliegt, so dass der Zwischenspalt durch das elastische Band oder die Dichtungsvorrichtung zumindest in dem genannten Verstellbereich überbrückt wird. Das elastische Band ist dabei so gestaltet, dass dieses in Spannweiten-Richtung SW1, SW2 nachgiebig ist, wenn dieses durch die Relativ-Bewegung des jeweiligen aerodynamischen Körpers und die Außenhaut 20 der Spalt-Überbrückungsvorrichtung 1 zusammen gedrückt wird, und sich in ihre Ausgangsform zurück bildet, wenn sich der jeweilige aerodynamische Körper und die die Außenhaut 20 der Spalt-Überbrückungsvorrichtung 1 auseinander bewegen. Bei einer Ausführungsform der Erfindung liegt die Außenhaut 20 der Spalt-Überbrückungsvorrichtung 1 im gesamten Verstellbereich der aerodynamischen Körper A1, A2 an dem Band oder der Dichtungsvorrichtung an.

Das elastische Band oder die Dichtungsvorrichtung kann an der Außenhaut des jeweiligen aerodynamischen Körpers oder einem Trägerteil des jeweiligen aerodynamischen Körpers wie z.B. einer Rippe dessselben angebracht sein und z.B. die Form eines Dichtungsprofils haben. Ein solches Band oder eine solche Dichtungsvorrichtung kann insbesondere dann und auf derjenigen Seite der Außenhaut 20 der Spalt-Überbrückungsvorrichtung 1 vorgesehen sein, die keine Überlappung mit der benachbarten Außenhaut des jeweiligen aerodynamischen Körpers bildet. Ein solches elastisches Band oder eine solche Dichtungvorrichtung kann jedoch auch vorgesehen sein, wenn sich, auch in einem Verstellbereich der aerodynamischen Körper, ein Überlappungsbereich 23, 24 ergibt. Das genannte elastische Band kann zusätzlich oder alternativ dazu auch an der Spalt-Überbrückungsvorrichtung 1 und insbesondere an dem Schalenteil oder der Außenhaut 20 der Spalt-Überbrückungsvorrichtung 1 angebracht sein.

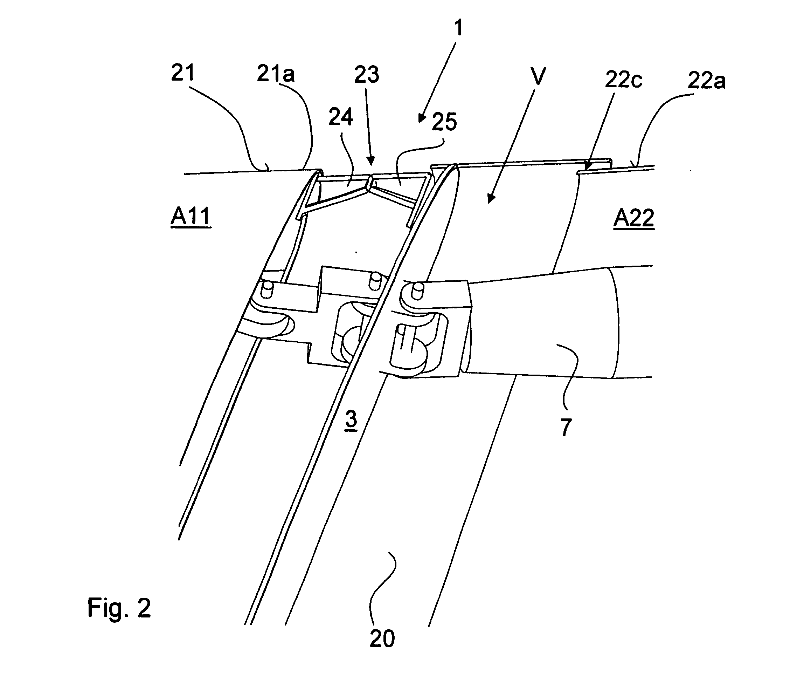

Die in der Figur 1 in einer schematischen Perspektiv-Darstellung sind zwei aerodynamische Körper A1, A2 als Teil eines Tragflügels mit der erfindungsgemäß vorgesehenen Spalt-Überbrückungsvorrichtung 1 dargestellt. Die aerodynamischen Körper A1, A2 sowie die Spalt-Überbrückungsvorrichtung 1 sind, zur besseren Veranschaulichung, jeweils in einer teilweise aufgeschnittenen Form von oben gezeigt, bei der Außenhaut teilweise nicht dargestellt ist. Der erste aerodynamische Körper A1 und der zweite aerodynamische Körper A2 weisen jeweils eine Außenhaut 21 bzw. 22 auf, die diese in üblichen Anwendungsfällen vollständig umgeben. Die in den Figuren 1 und 2 gezeigte Ausführungsform weist eine entlang dem Rand der Außenhaut 21 umlaufende Dichtungs-Vorrichtung 23 in Form einer umlaufenden Dichtungschale oder Dichtungskappe 23a auf, die an dem ersten aerodynamischen Körper A1 angebracht und derart gestaltet ist, dass die Spalt-Überbrückungsvorrichtung 1 an dieser bei dem gesamten oder einem Teilbereich der Verstellzustände der aerodynamischen Körper A1, A2 an diesem anliegt. Die Dichtungsschale hat eine Profilform mit einer Außenkontur-Fläche, die der Außenkontur-Fläche der Außenhaut 21 des ersten aerodynamischen Körpers A1 und dem Schalenteil 20 der Spalt-Überbrückungsvorrichtung 1 angepasst, d.h. diesen ähnlich ist. Dabei kann die Dichtungsvorrichtung einen an der Dichtungsschale 23 angeordneten Flansch mit einer Anlagefläche 23b aufweisen, an der die Kopplungs-Rippe 3 anliegt. Diese Dichtungsvorrichtung 23 kann so gestaltet sein, dass diese luftdicht oder weitgehend luftdicht an der Spalt-Überbrückungsvorrichtung 1 anliegt. Insbesondere zu diesem Zweck kann die Dichtungsvorrichtung 23 mit der Dichtungsschale 20 und dem Flansch gebildet sein, an dem die Kopplungs-Rippe 3 mit seiner dem Flansch zugewandten Fläche an dem Flansch anliegt.

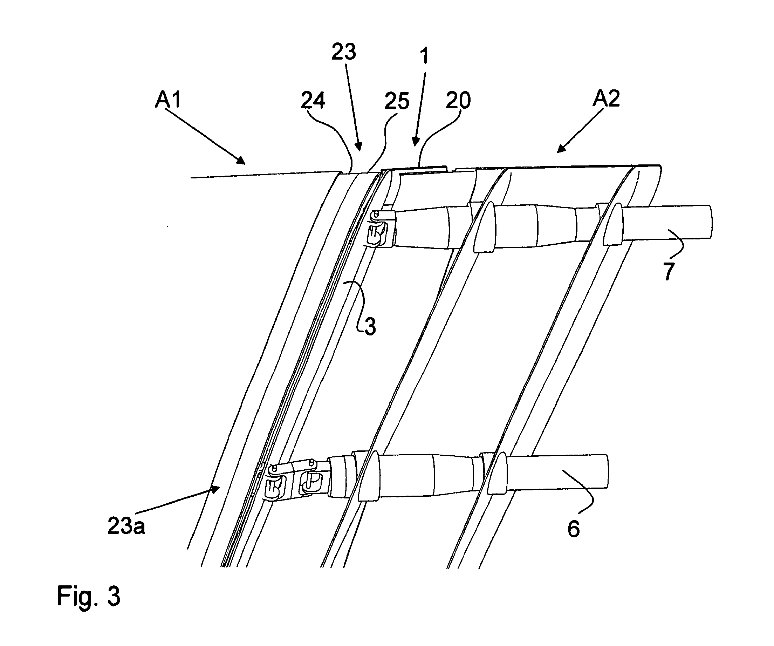

Die Dichtungsvorrichtung 23 kann auch aus einer Mehrzahl von in der Spannweiten-Richtung SW1, SW2 des jeweiligen aerodynamischen Körpers A1, A2 nebeneinander liegenden Dichtungsprofilen gebildet sein. In der Ausführungsform der Figur 3 sind zwei in der Spannweiten-Richtung SW1, SW2 des ersten aerodynamischen Körpers A1 nebeneinander liegende Dichtungsprofile 24, 25 angeordnet. Dadurch kann, z.B. durch die Verwendung unterschiedlicher Querschnittsformen der Dichtungsprofile 24, 25 und/oder durch die Verwendung unterschiedlicher Materialien der Dichtungsprofile 24, 25 eine Abstimmung für den jeweiligen Anwendungsfall vorgenommmen werden. Z.B. kann mit diesen Mitteln das nahe der Spalt-Überbrückungsvorrichtung 1 gelegene Dichtungsprofil 24, 25 in Spannweiten-Richtung weicher ausgebildet sein, um die Dichtungs-Wirkung zu optimieren.

Das in der Figur 1 dargestellte Ausführungsbeispiel der Erfindung weist einen Überlappungsbereich zwischen der Außenhaut 22a des äußeren Abschnitts A22 des zweiten aerodynamischen Körpers A2 und der Außenhaut oder dem Schalenteil 20 der Spalt-Überbrückungsvorrichtung 1 auf, wobei das Schalenteil 20 außerhalb der Außenhaut 21 a des äußeren Abschnitts A11 des ersten aerodynamischen Körpers A1 gelegen ist.

Zur Kopplung der Spalt-Überbrückungsvorrichtung 1 mit den aerodynamischen Körpern A1, A2 ist die Kopplungs-Rippe 3 mittels einer ersten Kopplungs-Vorrichtung K1 gelenkig mit dem ersten der aerodynamischen Körper A1 und mittels einer zweiten Kopplungs-Vorrichtung K2 gelenkig mit dem neben dem ersten aerodynamischen Körper A1 gelegenen zweiten aerodynamischen Körper A2 gekoppelt.

Die genannten Ausführungformen können erfindungsgemäß analoger Weise auch vorgesehen sein bei einer Anordnung aus einem Bauteil des Rumpfs oder des Hauptflügels und einem neben dem Bauteil des Rumpfs oder des Hauptflügels angeordneten aerodynamischen Körper A1, A2. Bei dieser Variante können neben dem Bauteil des Rumpfs oder des Hauptflügels auch eine Mehrzahl aerodynamischer Körper A1, A2 mit einer zwischen diesen angeordneten Spalt-Überbrückungsvorrichtung 1 mit den erfindungsgemäßen Ausführungsformen angeordnet sein.

Bei der Anordnung aus einem Bauteil des Rumpfs oder des Hauptflügels und einem neben dem Bauteil angeordneten aerodynamischen Körper kann insbesondere das Schalenteil 20 außerhalb oder innerhalb eines Schalenteils des Bauteils und dieses überlappend angeordnet sein. Auch kann an dem Bauteil oder dem neben diesem gelegenen aerodynamischen Körper eine der genannten Ausführungsformen der Dichtungsvorrichtung angeordnet sein.

Die Spalt-Überbrückungsvorrichtung 1 weist insbesondere auf:
- ein Schalenteil 20, das sich am Spalt G zumindest abschnittsweise entlang der Kontur der Außenschale des aerodynamischen Körpers erstreckt,
- eine mit dem Schalenteil 20 verbundenen Kopplungs-Rippe 3,
- eine Kopplungs-Vorrichtung K1 zur gelenkigen Kopplung der Rippe 3 an dem aerodynamischen Körper A1 und
- eine zweite Kopplungs-Vorrichtung K2 zur gelenkigen Kopplung der Kopplungs-Rippe 3 an dem neben dem aerodynamischen Körper A1 gelegenen Bauteil des Rumpfes oder des Hauptflügels.

Im Folgenden wird die erfindungsgemäße Spalt-Überbrückungsvorrichtung 1 an Hand der Ausführungsform des Tragflügels mit zwei nebeneinander angeordneten gegenüber dem Hauptflügel verstellbaren aerodynamischen Körpern A1, A2 gemäß der Figuren 1ff. in dem Sinne beschrieben, dass die einzelnen Merkmale in analoger Weise auf die genannten Varianten und Ausüfhrungsformen der Erfindung angewendet werden können:
Das Schalenteil 20 der Spalt-Überbrückungsvorrichtung 1 ist hinsichtlich seiner Formgebung mit einem leichten Spiel an die Schalenteile 21a, 22a der aerodynamischen Körper A1 bzw. A2 angepasst und ist somit, je nach der Ausbildung der Kopplungs-Vorrichtungen K1, K2 gegenüber dem einen und/oder dem anderen der aerodynamischen Körper A1, A2 verschiebbar. Bei der dargestellten Ausführungsform ist der Endabschnitt 22a der Außenhaut 22 des zweiten aerodynamsichen Körpers A2 in das Schalenteil 20 teleskopartig hinein oder heraus bewegbar. Die Bewegung der Spalt-Überbrückungsvorrichtung 1 und insbesondere des Schalenteils 20 gegenüber der Außenhaut 22 kann hierbei translatorische Komponenten und/oder rotatorische Komponenten haben. Das Schalenteil 20 und die Außenhaut ist dabei so gestaltet, dass ein Verklemmen derselben bei den Relativbewegungen verhindert wird.

Zumindest eine der Kopplungs-Vorrichtungen K1, K2 zur Kopplung der Kopplungs-Rippe 3 an dem jeweiligen aerodynamischen Körper kann zwei in Flügeltiefen-Richtung FT1, FT2 hintereinander angeordnete Lenker 4, 5 mit jeweils zwei Gelenken 4a, 4b; 5a, 5b aufweisen, die den Lenker 4, 5 an den aerodynamischen Körper A1 und die Kopplungs-Rippe 3 anlenken. In der Figur 1 sind die Lenker 4, 5 mittels des Gelenks 4a, 5a an der Kopplungs-Rippe 3 und mittels des Gelenks 4b, 5b an den ersten aerodynamischen Körper A1 und insbesondere dessen Tragwerk angekoppelt. Bei einem weiteren Ausführungsbeispiel kann die Kopplungs-Rippe 3 auf beiden Seiten mittels derartigen Lenkern und Gelenken mit dem ersten bzw. zweiten aerodynamischen Körper A1, A2 gekoppelt sein.

Bei dem Ausführungsbeispiel, das in der Figur 1 gezeigt ist, weist die Kopplungs-Vorrichtung K2 zur Kopplung der Kopplungs-Rippe 3 mit dem zweiten aerodynamischen Körper A2 zwei in der FlügeltiefenRichtung FT2 hintereinander und sich quer zur Flügeltiefen-Richtung FT2 erstreckende Verbindungsteile 6, 7 auf, die über eine Gelenk-Verbindung an die Kopplungs-Rippe 3 angekoppelt sind und die in ihrer Längsrichtung zur Verschiebung des Schalenteils 20 relativ zu dem aerodynamischen Körper A2 in Spannweiten-Richtung SW2 verlängerbar sind. Bei dem dargestellten Ausführungsbeispiel ist eines (Bezugszeichen 7) der Verbindungsteile und zwar das in der Zeichenebene der Figur 1 obere und näher an der Vorderkante des aerodynamischen Körpers A2 gelegene Verbindungsteil 9 mittels eines Verbindungsgelenks 9 an der Kopplungs-Rippe 3 angekoppelt. Die Drehachse 9b des Verbindungsgelenks 9 verläuft quer zu der Flügeltiefen-Richtung FT2 und der Spannweiten-Richtung SW2 des zweiten aerodynamischen Körpers A2 und insbesondere in einem Winkelbereich von 45 bis 90 Grad zu diesen. Weiterhin ist das weitere (Bezugszeichen 6) der beiden Verbindungsteile mittels eines Lenkers 8 an der Kopplungs-Rippe 3 angekoppelt, so dass ein erstes Drehgelenk 8a den Lenker 8 an das Verbindungsteil 9 und ein zweites Drehgelenk 8b den Lenker 8 an die Kopplungs-Rippe 3 anlenkt. Die Drehachsen der Verbindungsgelenke 8a, 8b verlaufen quer zu der Flügeltiefen-Richtung FT2 und der Spannweiten-Richtung SW2 des zweiten aerodynamischen Körpers A2 und insbesondere in einem Winkelbereich von 45 bis 90 Grad zu diesen.

Generell kann die Kopplungs-Rippe 3 mit nur einem in seiner Länge verlängerbaren Verbindungsteil an dem jeweiligen aerodynamischen Körper angekoppelt sein, wobei die Verbindung des Verbindungsteils mit der Kopplungs-Rippe über ein Drehgelenk oder über einen Lenker oder eine anderes Kopplungsteil vorgesehen sein kann. Bei der Kopplung der Kopplungs-Rippe 3 mit einem aerodynamischen Körper kann insbesondere auch ein in seiner Längsrichtung verlängerbares Verbindungsteil oder Kopplungsteil in Kombination mit zumindest einer Lenker-Kopplung vorgesehen sein, wie sie in dem dargestellten Ausführungsbeispiel zwischen der Kopplungs-Rippe 3 und dem ersten aerodynamischen Körper A1 eingerichtet ist. Insbesondere weisen die Kopplungs-Anschlüsse der ersten oder der zweiten Kopplungs-Vorrichtung Kugelgelenke auf. Diese können z.B. an den Gelenk-Anbindungen für die Kopplungs-Rippe oder für den jeweiligen aerodynamischen Körper oder abwechselnd an der Kopplungs-Rippe und dem jeweiligen aerodynamischen Körper vorgesehen sein.

Bei einem weiteren Ausführungsbeispiel kann die Kopplungs-Rippe 3 auf beiden Seiten mittels einem in seiner Längsrichtung verlängerbaren Verbindungsteil, auch in Kombination mit einer Lenker-Verbindung, sowohl mit dem ersten als auch mit dem zweiten aerodynamischen Körper gekoppelt sein.

Generell weisen die Kopplungs-Vorrichtungen eine Gelenk-Verbindung mit einer oder mehreren Gelenkachsen auf. In besonderen Anwendungsfällen kann eine der beiden Kopplungs-Vorrichtungen entfallen. Die Gestalt und Dimensionierung der Gelenk-Verbindungen sind in dem Ausführungsbeispiel der Figur 1 insbesondere so gewählt, dass das Schalenteil 20 der Spalt-Überbrückungsvorrichtung 1 in einem vorbestimmten Abstand zu dem diesem zugewandten Rand des jeweiligen aerodynamischen Körpers gehalten wird und gleichzeitig die Dichtungs-Vorrichtung mit einem vorbestimmten Anpressdruck aufeinander gepresst werden. Dadurch wird die Abdichtung zwischen dem Schalenteil 20 der Spalt-Überbrückungsvorrichtung 1 und der Außenhaut des ersten aerodynamischen Körpers A1 hergestellt. Aufgrund der Gestaltung der Kopplungs-Vorrichtung K1 mit den Lenkern 4, 5 kann das Schalenteil 20 der Spalt-Überbrückungsvorrichtung 1 im Spaltbereich relativ zur ersten aerodynamischen Klappe A1 bzw. deren Rand jedoch auch geringfügige Bewegung in Spannweiten-Richtung SW1 und in Profiltiefen-Richtung FT1 ausführen, ohne dass die Dichtwirkung beeinträchtigt wird. Je nach Gestaltungsweise der Kopplungs-Vorrichtung und insbesondere ihrer Gelenke kann das Schalenteil 20 der Spalt-Überbrückungsvorrichtung 1 ferner geringfügige Kippbewegungen relativ zum Rand des aerodynamischen Körpers A1 ausführen. Die Gelenk-Verbindungen können grundsätzlich auch so konstruiert werden, dass diese geringfügige Bewegungen in der Profildicken-Richtung Z gestatten.

Mit den erfindungsgemäß vorgesehenen Kopplungs-Vorrichtungen wird das Schalenteil 20 der Spalt-Überbrückungsvorrichtung 1 je nach der Relativ-Bewegung der aerodynamischen Körper in vorbestimmter Weise zwischen den Außenhäuten der aerodynamischen Körper A1, A2 derart gehalten, dass diese den Spalt G zumindest teilweise oder vollständig abdeckt. Eine separate Antriebseinrichtung für die Verstellung der Spalt-Überbrückungsvorrichtung 1 kann, jedoch muss bei den genannten Ausführungsbeispielen nicht vorgesehen sein.

Zur Positionierung sowie der Führung der gegebenenfalls teleskopartigen Bewegung des Schalenteils 20 oder der Spalt-Überbrückungsvorrichtung 1 mit Vermeidung eines Verklemmens der Spalt-Überbrückungsvorrichtung 1 kann vorgesehen sein, dass die Spalt-Überbrückungsvorrichtung 1 und/oder eine oder beide Kopplungs-Vorrichtungen K1, K2 mittels einer Führungs-Vorrichtung an dem jeweiligen aerodynamischen Körper geführt werden.

Die Führungsvorrichtung kann in einem Ausführungsbeipsiel eine Aufnahme aufweisen, in der eines der Verbindungsteile oder beide Verbindungsteile in deren Längsrichtung geführt werden. Die Aufnahme kann insbesondere als Ring ausgeführt sein, der einen zylindrischen Abschnitt des jeweiligen Verbindungsteils 6, 7 aufnehmen und dabei insbesondere eine Längsverschiebung des Verbindungsteils zulassen kann. In einer Weiterführung dieses Ausführungsbeispiels kann der Ring an einer der Rippen 4 des jeweiligen aerodynamischen Körpers angeordnet sein. Bei der Ausführungsform der Figur 1 sind zwei ringförmige Aufnahmen 31, 32 zum Halten und Führen des ersten Verbindungsteils 6 und zwei ringförmige Aufnahmen 33, 34 zum Halten und Führen des zweiten Verbindungsteils 7 vorgesehen. Durch die Verwendung von zwei ringförmigen Aufnahmen ist das jeweilige Verbindungsteil 6, 7 in diesen in seiner Längsrichtung verschiebbar gelagert. Die Verschiebung des Verbindungsteils oder eines Teils desselben tritt auf, wenn sich das Verbindungsteil, insbesondere durch Ausübung einer Zugkraft durch den jeweils anderen aerodynamischen Körpe auf die Spalt-Überbrückungsvorichtung in seiner Länge verändert. Bei der Verwendung von nur einer ringförmigen Aufnahme je Verbindungsteil kann dieses noch zusätzlich relativ zur Rippe 3, in der oder an der die Aufnahme gelagert ist, verschwenkt werden. Die Art und Anzahl der Lagerungen jedes Verbindungsteils hängt von dem jeweiligen Anwendungsfall und der Gestaltung des erfindungsgemäßen Tragflügels ab.

Auch können die Verbindungsteile 6, 7 stabförmig gebildet sein und in Führungsrohren geführt sein.

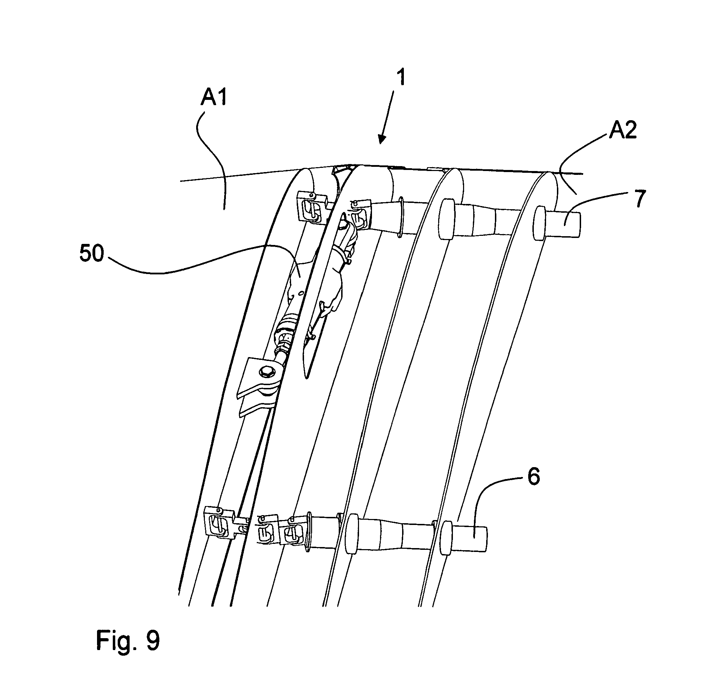

Figur 9 eine Detailansicht eines weiteren Ausführungsbeispiels der Kombination von zwei aerodynamischen Körpern mit einer Spalt-Überbrückungsvorrichtung und einer Dichtungs-Vorrichtung sowie einer Verbindungsstrebe 50, die einen aerodynamischen Körper mit der Spalt-Überbrückungsvorrichtung verbindet. Die Verbindungsstrebe 50 ist zur Erhöhung der Ausfallsicherheit der aerodynamsichen Körper für den Fall vorgesehen, bei dem einer oder beide der aerodynamischen Körper insbesondere durch Bruch eines tragenden Bauteils von ihrer jeweiligen Verstell-Vorrichtung gelöst werden. In diesem Fall koppelt die Verbindungsstrebe 50 die beiden aerodynamischen Körper, so dass der von dessen Verstell-Vorrichtung gelöste aerodynamische Körper von dem anderen aerodynamischen Körper, der noch von desssen Verstell-Vorrichtung gehalten wird, deshalb in einem stabilen Zustand am Hautpflügel gehalten wird. Eine solche Verbidnungsstrebe 50 kann bei jeder der erfindungsgemäßen Ausführungsformen vorgesehen sein.

Bei der dargestellten Ausführungsform koppelt die Verbindungsstebe 50 einen aerodynamischen Körper A1 und die Kopplungs-Rippe 3. Alternativ kann die Verbindungsstrebe 50 auch die beiden aerodynamsichen Körper A1, A2 direkt miteinander koppeln.

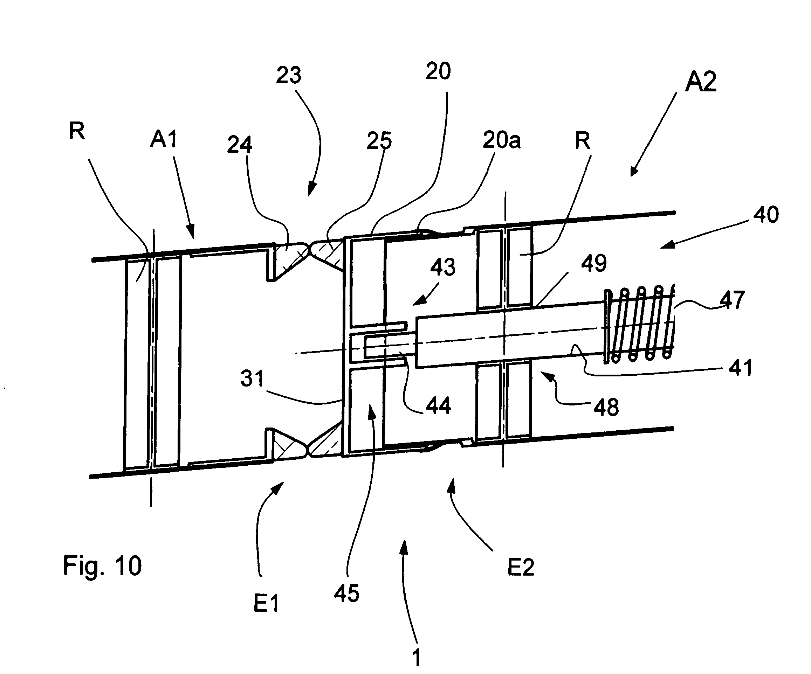

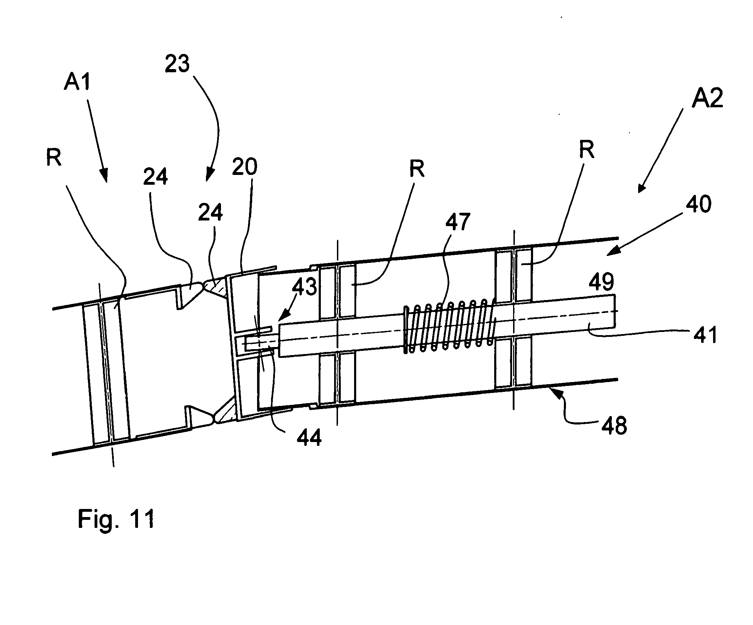

Die Figur 10 zeigt einen Schnitt durch ein weiteres Ausführungsbeispiel einer erfindungsgemäßen Kombination zweier aerodynamischer Körper in einer ersten Lage zueinander, die die Figur 11 in einer zweiten Lage zueinander zeigt. Die Blickrichtung für die gezeigten aerodynamischen Körper ist in etwa in der Profiltiefen-Richtung gerichtet. Bei diesem Ausführungsbeispiel ist an dem dem zweiten aerodynamischen Körper A2 zugewandten Ende des Schalenteils 20 eine Dichtungs-Vorrichtung 20a in Form eines Dichtungs-Profils angebracht. Das Dichtungselement 20a ist in diesem Ausführungsbeispiel lippenartig ausgestaltet. Ein vergleichbares Dichtungselement könnte auch jeder der erfindungsgemäßen Ausführungsformen vorgesehen werden, wobei eine in Bezug auf das Schalenteil 20 innen und außen liegende Anordnung realisierbar ist. Die Dichtungs-Vorrichtung oder das Dichtungselement kann in Umfangsrichtung des Schalenteils 20 abschnittsweise oder über den ganzen Umfang desselben angebracht sein.

Bei der erfindungsgemäßen Ausführungsform wird die Spalt-Überbrückungsvorrichtung 1 mittels einer Andrück-Vorrichtung 40 von dem zweiten aerodynamischen Körper A2 an den ersten aerodynamischen Körper A1 angedrückt. Dabei kann vorgesehen sein, dass die Spalt-Überbrückungsvorrichtung 1 mittels einer zweiten Kopplungs-Vorrichtung K2, wie diese z.B. an Hand der Ausführungsform der Figur 1 beschrieben worden ist, gelenkig oder auf andere Weise an dem zweiten aerodynamischen Körper A2 angekoppelt ist. Generell kann jedoch vorgesehen sein, dass die Spalt-Überbrückungsvorrichtung 1 lediglich auf den äußeren Abschnitt A22 der Außenhaut 22 des zweiten aerodynamischen Körpers A2 aufgeschoben ist. Aufgrund des Andrückens der Spalt-Überbrückungsvorrichtung 1 an den ersten aerodynamischen Körper A1 mittels der Andrück-Vorrichtung bewirkt eine Relativ-Bewegung des ersten aerodynamischen Körpers gegenüber dem zweiten aerodynamischen Körperes A2 eine entsprechende Bewegung der an dem ersten aerodynamischen körper A1 anliegenden Spalt-Überbrückungsvorrichtung 1.

Bei einem weiteren Ausführungsbeispiel ist zwischen der Spalt-Überbrückungsvorrichtung 1 und dem ersten aerodynamischen Körper A1 eine Dichtungs-Vorrichtung 23 angeordnet. Die Dichtungs-Vorrichtung 23 kann an dem ersten aerodynamischen Körper A1 und/oder an der Spalt-Überbrückungsvorrichtung 1, d.h. an den jeweils einander zugewandte Enden oder Rändern derselben angeordnet sein. Bie der dargestellten Ausführungform ist zum einen ein Dichtungsprofil 24 oder Dichtungsband an dem ersten aerodynamischen Körper A1 und zum anderen ein Dichtungsprofil 25 oder Dichtungsband an der Spalt-Überbrückungsvorrichtung 1 angebracht.

Eine Ausführungsform der Andrück-Vorrichtung 40 weist einen Druckstab 41 mit einem Lagerteil 44 z.B. in Form eines Stiftes sowie eine Lagervorrichtung 45 auf. Die Lagervorrichtung ist an der Spalt-Überbrückungsvorrichtung 1 angebracht und kann als Vertiefung oder Aufnahme gebildet sein, die zur Aufnahme oder Lagerung des Lagerteils 44 geeignet ist. Das Lagerteil 44 kann insbesondere mittels eines Gelenks mit dem Druckstab gekoppelt sein. Das gelenk kann ein Drehgelenk oder ein Kugelgelenk sein.

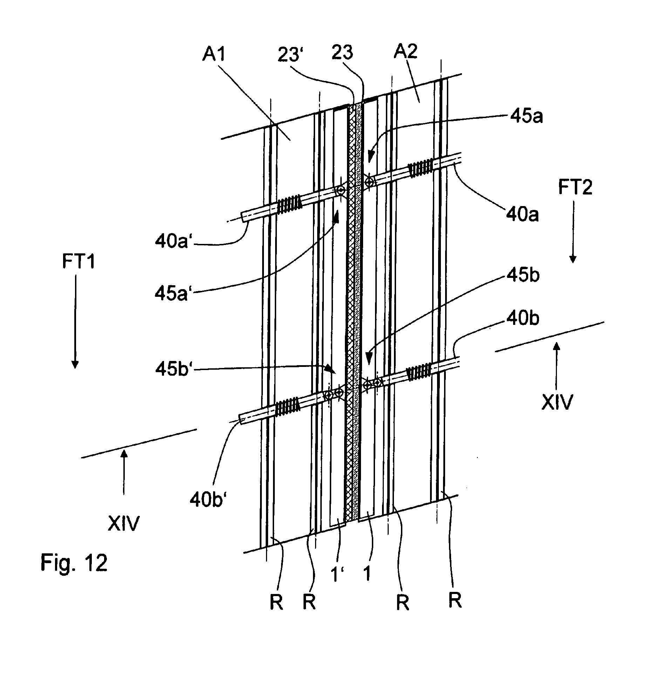

Die Lagervorrichtung und das Lagerteil kann in verschiedener Weise realisiert und z.B. als Linearführung (Figur 10) oder als Lagerung, die eine Schwenkbewegung des Druckstabs 41 relativ zur Spalt-Überbrückungsvorrichtung 1 zulässt. Bei der dargestellten Ausführungsform ist hierzu der Querschnitt der Aufnahme größer als der Querschnitt des Lagerteils 44, so dass ein Verschwenken des Lagerteils in der Lagervorrichtung möglich ist. Im Gegensatz zu der Fig. 11 verfügt das Gelenkelement 42 des Schubelementes 40 über einen weiteren Freiheitsgrad, was z.B. durch Verwendung eines sphärischen Gelenklagers bzw. eines Kugelgelenkes oder dergleichen realisiert werden kann. Diese Ausgestaltungsweise eignet sich insbesondere für Bauformen, bei denen die beiden benachbarten aeroodynamischen Körper A1, A2, wie in der Figur 12 gezeigt, winklig zueinander angeordnet sind bzw. während des Klappenbetriebs entsprechende große Winkeländerungen ausführen.

Die Kombination aus Lager-Vorrichtung und Lagerteil kann auch als Gelenk ausgebildet sein.

Die Spalt-Überbrückungsvorrichtung 1 ist bei dieser Ausführungsform also nicht an den ersten aerodynamischen Körper A1 gekoppelt, sondern frei gegenüber diesem verschiebbar. Da die Andrück-Vorrichtung die Spalt-Überbrückungsvorrichtung 1 gegen den ersten aerodynamischen Körper A1 drückt und die Spalt-Überbrückungsvorrichtung 1 auf den äußeren Abschnitt A22 des zweiten aerodynamischen Körpers A2 aufgeschoben ist, wird die Spalt-Überbrückungsvorrichtung 1 zwischen den beiden aerodynamischen Körpern A1, A2 gehalten.

Die Andrück-Vorrichtung 40 ist derart ausgeführt, dass diese den Druckstab 41 mit einer in Grenzen vorbestimmten Druckkraft an die Spalt-Überbrückungsvorrichtung 1 andrückt. Die Druckkraft kann durch einen Stellantrieb oder durch eine Vorspann-Vorrichtung aufgebracht werden. Bei der in der Figur 10 dargestellten Ausführungsform wird die Druckkraft durch eine Vorspann-Vorrichtung in Form einer Feder-Vorrichtung aufgebracht, die ein teleskopartig von einem Basiskörper aus ein bewgbares Stabelement in Richtung zur Spalt-Überbrückungsvorrichtung 1 vorspannt.

Es können mehrere Andruck-Vorrichtungen 40 in der Profiltiefen-Richtung gesehen nebeneinander im zweiten aerodynamischen Körper A2 angeordnet sein.

Der zumindest eine Druckstab kann mittels Führungs-Vorrichtungen z.B. an den Rippen 4 in ihrer Längsrichtung geführt sein. Dabei kann die Führungsvorrichtung wie an Hand des Ausführungsbeispiels der Figur 1 beschrieben gestaltet sein. Insbesondere kann die Führungsvorrichtung Ausnehmungen 49 in den Rippen 4 und optional in diesen gelegene Führungsringe zur Aufnahme des Druckstabes in einer Weise aufweisen, dass dieser längsverschieblich und optional auf um seine Längsachse rotierbar von der Führungsvorrichtung aufgenommen ist. Zu diesem Zweck kann der Druckstab als Teleskopstab (Figur 10) gestaltet sein. Bei dieser Ausführungsform fungiert die Andrück-Vorrichtung als Stellaktuator und als Teil einer Führungs-Vorrichtung zur Führung der Spalt-Überbrückungsvorrichtung 1 am zweiten aerodynamischen Körper A2. Die Andrück-Vorrichtungen stellen sicher, dass die Spalt-Überbrückungsvorrichtung 1 bei jedem Verstell-Zustand der aerodynamischen Körper gegen die Stirnseite oder das Ende E2 des ersten aerodnamsichen Körpers A1 bzw. die zwischen diesen gelegene Dichtungs-Vorrichtung 23 gedrückt und der variable Spalt S zuverlässig abgedichtet wird. Bei dem Vorsehen mehrerer, in Profiltiefen-Richtung voneinander beabstandeter und gelenkig an der Spalt-Überbrückungsvorrichtung 1 angeschlossener Druckstäbe 41 können die Verschiebungswege der Druckstäbe 41 in Abhängigkeit der jeweiligen Relativbewegung zwischen den benachbarten aerodynamischen Körpern gleich oder unterschiedlich sein. Dadurch kann die Spalt-Überbrückungsvorrichtung 1 auch bei dieser Variante an unsymmetrische Spaltformen bzw. ungleiche Spaltabstände an einem Vorder- und Hinterkantenbereich der benachbarten Klappen 2, 4 angepasst werden.

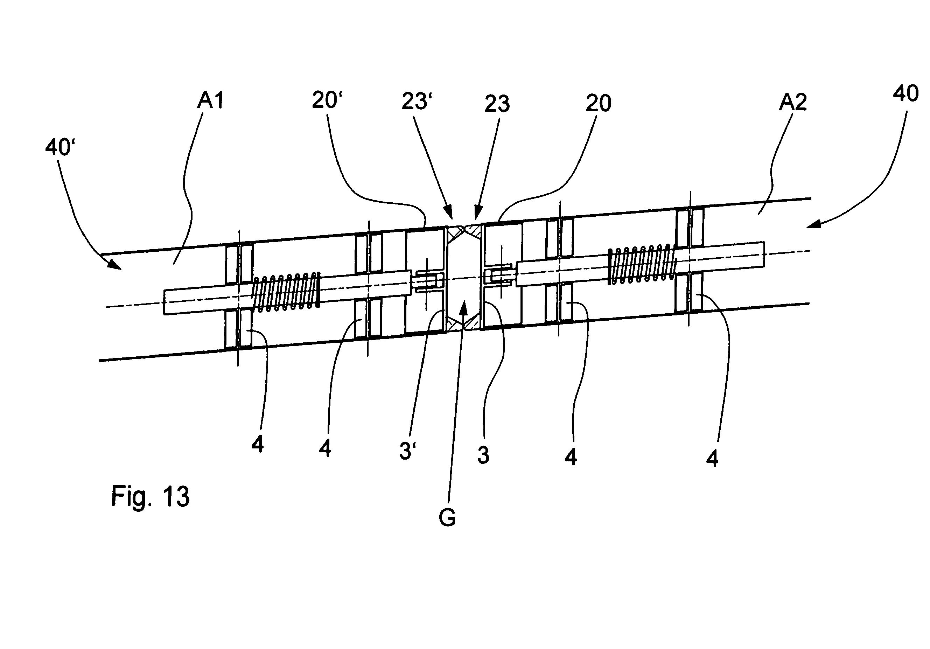

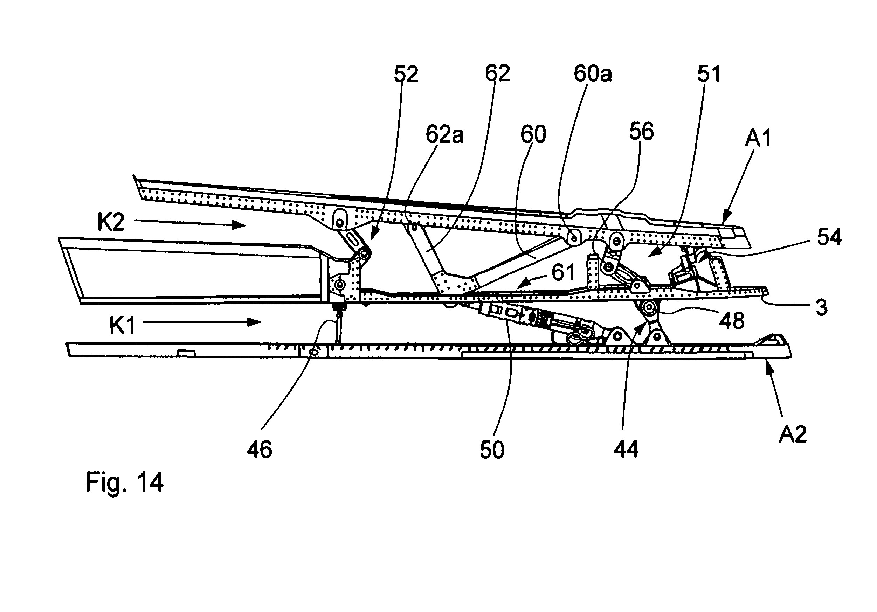

In den Figuren 12 und 13 ist ein weiteres Ausführungsbeispiel der Erfindung dargestellt, wobei die Figur 12 eine schematische, geschnittene Draufsicht auf die Anordnung der aerodynamischen Körper A1, A2 und die Figur 14 ist eine schematische Schnittansicht derselben entlang der Schnittlinie XIV - XIV in Figur 13 zeigt. Bei dieser Ausführungsform ist jede der zwei benachbarten aerodynamischen Körper A1, A2 im Bereich ihrer einander gegenüberliegenden Stirnseiten mit einer teleskopartig verschiebbaren Spalt-Überbrückungsvorrichtung 1, 1' ausgestattet. An jede der Spalt-Überbrückungsvorrichtung 1, 1' ist jeweils eine Andrück-Vorrichtung 40 bzw. 40' zum Drücken der jeweiligen Spalt-Überbrückungsvorrichtung 1 bzw. 1' in richtung zum benachbarten aerodynamischen Körper gekoppelt, wie dies an Hand der Figuren 10, 11 beschrieben worden ist. Die Andrück-Vorrichtungen 40 bzw. 40' drücken die jeweils angekoppelte Spalt-Überbrückungsvorrichtung 1, 1' in Richtung zum benachbarten aerodynamischen Körper A1, A2. An jeder der beiden Spalt-Überbrückungsvorrichtungen 1,1' sind optional Dichtungs-Vorrichtungen 23, 23' angebracht, die zumindest abschnittsweise entlang des Rands der einander zugewandten Stirnflächen der Spalt-Überbrückungsvorrichtungen 1, 1' verlaufen und die durch gegenseitiges Andrücken der Spalt-Überbrückungsvorrichtungen 1, 1' durch die Andrück-Vorrichtungen 40 bzw. 40' aneinander anliegen. Die Dichtungs-Vorrichtungen 23, 23' und die Andrück-Vorrichtungen 40 bzw. 40' können auch derart gestaltet sein, dass diese den Spalt G abdichten. Diese Ausgestaltungsweise ermöglicht eine erhöhte Beweglichkeit der abdichtenden Komponenten im Spaltbereich und eignet sich zur Überbrückung und Abdichtung eines besonders großen und in seiner Form stark variierenden Spaltes G.

Dieses Ausführungsbeispiel kann in verschiedenen Varianten realisiert sein, die bereits an den anderen Ausführungsbeispielen beschrieben worden sind. Z.B. können mehrere in der Flügeltiefen-Richtung FT1, FT2 nebeneinander angeordnete Andrück-Vorrichtungen 40 bzw. 40' vorgesehen und mit der Spalt-Überbrückungsvorrichtungen 1, 1' gekoppelt sein. Bei dem Ausführungsbeispiel der Figur 12 sind am ersten aerodynamischen Körper A1 zwei Andrück-Vorrichtungen 40a' und 40b' angeordnet, die über ein Drehgelenk 45a' bzw. 45b' an der zugeordneten Spalt-Überbrückungsvorrichtung 1' angekoppelt sind. Weiterhin sind am zweiten aerodynamischen Körper A2 ebenfalls zwei Andrück-Vorrichtungen 40a und 40b angeordnet, die über ein Drehgelenk 45a bzw. 45b an der zugeordneten Spalt-Überbrückungsvorrichtung 1 angekoppelt sind.

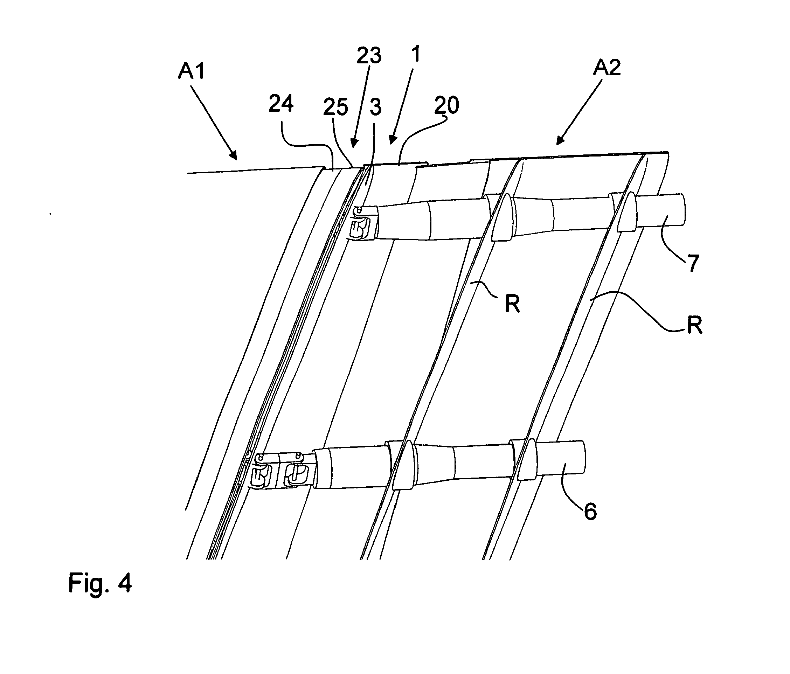

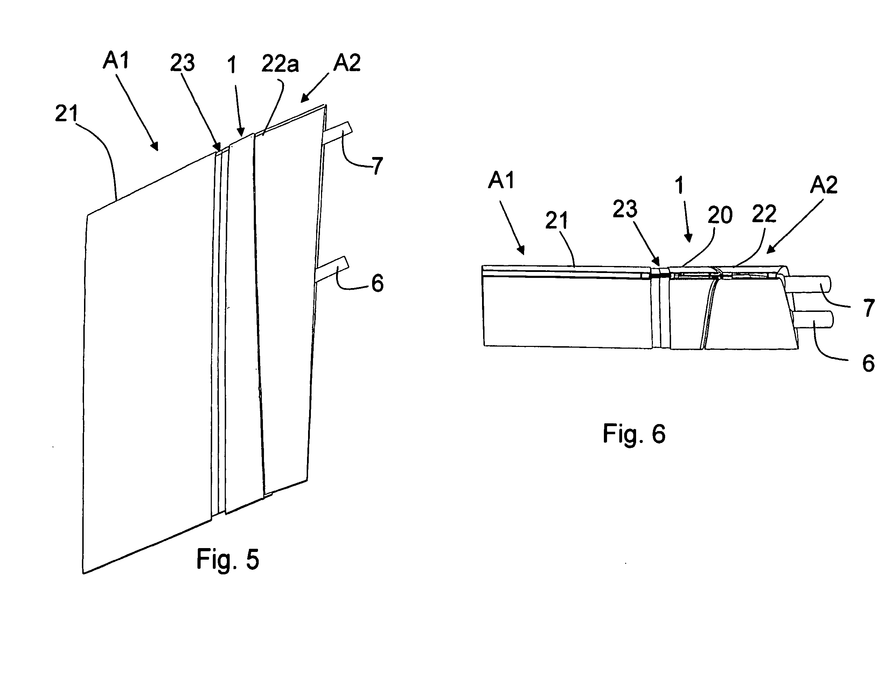

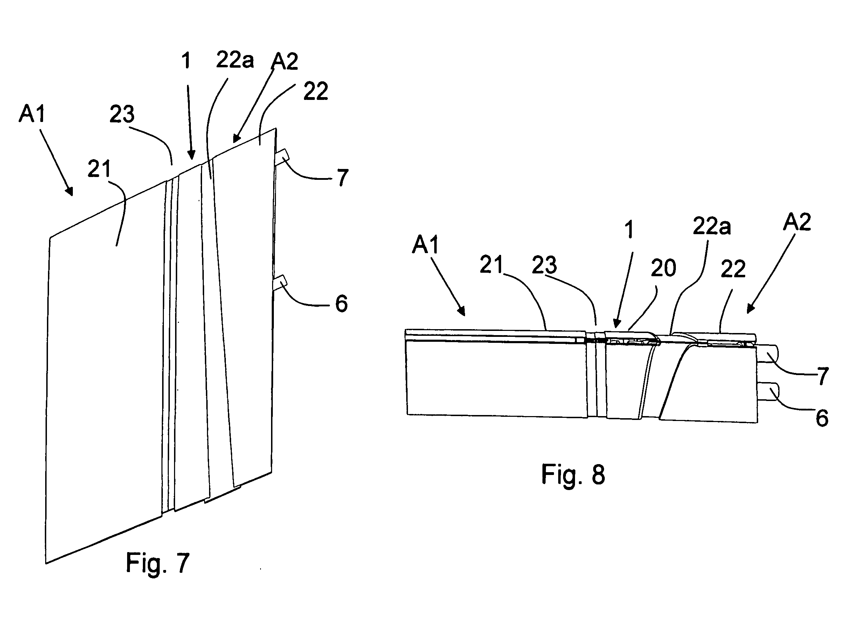

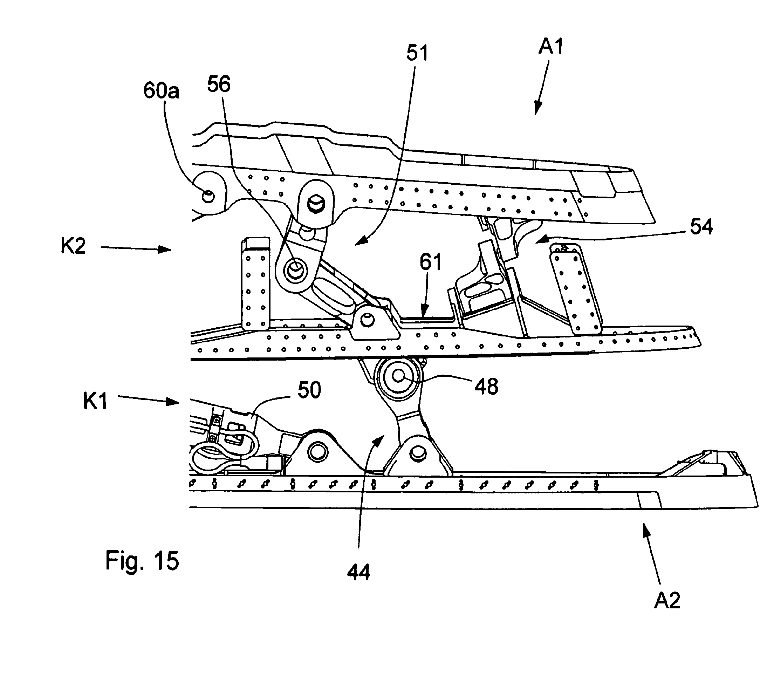

Figur 14 zeigt eine schematische, perspektivische Draufsicht auf ein fünftes Ausführungsbeispiel der Anordnung von zwei aerodynamischen Körpern und die Figur 15 ist eine perspektivische, vergrößerte Detailansicht des Bereichs XVI in Figur 14. In diesen beiden Zeichnungen sind die Hauthäute bzw. Außenumfangsflächen des ersten und zweiten aerodynamischen Körpers A1, A2 sowie der Endkappe 12 der besseren Übersichtlichkeit halber entfernt, und es sind nur die stirnseitigen Rippen 4 des ersten und zweiten aerodynamischen Körpers A1 bzw. A2 dargestellt. Von der Spalt-Überbrückungsvorrichtung 1 ist nur die Kopplungs-Rippe 3 als ein rippenartiger Skelettkörper dargestellt. Die Figuren 14 und 15 zeigen eine Realisierungsform der Ausführungsformen gemäß den Figuren 1 bis 10 mit den genannten Beuteilen und Funktionen.

Die zweite Kopplungs-Vorrichtung K2 ist aus zwei Gelenk-Verbindungen 44, 46 gebildet, die eine Rippe R und die Kopplungs-Rippe 3 koppeln. Die Kopplungselemente 44, 46 20 an der ersten Klappe 2 und dem Endkappen-Skelettkörper 12d befestigt. Die vordere, in den beiden genannten Zeichnungen obere Gelenk-Verbindung ist als Lenker-Verbindung oder Hebelgelenk-Anordnung ausgestaltet und über ein sphärisches Gelenklager 48 mit der Kopplungs-Rippe 3 gekoppelt. Die hintere, in den beiden Zeichnungen untere Gelenk-Verbindung 46 ist stabförmig ausgebildet und ebenfalls gelenkig an die Kopplungs-Rippe 3 gekoppelt.

Die erste Kopplungs-Vorrichtung K1 ist aus einer Führungslenker-Anordnung mit mehreren Führungslenkem 50, 52, 54 gebildet, welche die Spalt-Überbrückungsvorrichtung 1 bei einer im Wesentlichen in Spannweitenrichtung erfolgenden Verschiebung in mehreren Achsen im Spaltbereich zwischen den benachbarten aerodynamischen Körpern A1, A2 führen. Zwei Führungslenker 50, 52 sind in Profiltiefenrichtung voneinander beabstandet angeordnet, in Form von Kniehebeln ausgestaltet und greifen jeweils mit einem Ende an dem ersten aerodynamischen Körper A1 und mit dem anderen Ende an der Kopplungs-Rippe 3 an. Die Gelenkachsen dieser zwei Kniehebel 50, 52 verlaufen im Wesentlichen in Profildicken-Richtung, und die Kopplungs-Rippe 3 wird von diesem Kniehebel-Paar 50, 52 in Profildicken-Richtung gehalten und in Spannweiten-Richtung geführt. Der dritte, ebenfalls als Kniehebel ausgestaltete Führungslenker 54, ist in der Nähe der Vorderkante des ersten aerodynamischen Körpers A1 angeordnet und greift mit einem Ende an dem ersten aerodynamischen Körper A1 und mit dem anderen Ende an einem vorderen Bereich der Kopplungs-Rippe 3 an. Dieser dritte Kniehebel 54 besitzt als Kniegelenk ein sphärisches Gelenklager 56, das über mehrere Freiheitsgrade verfügt. Die Gelenk-Hauptachse dieses Gelenklagers 56 erstreckt sich jedoch annähernd in Profiltiefen-Richtung bzw. einem geringen spitzen räumlichen Winkel dazu, so dass der dritte Kniehebel 54 die Spalt-Überbrückungsvorrichtung 1 im Wesentlichen in Profiltiefen-Richtung hält und zwischen den benachbarten aerodynamischen Körpern A1, A2 führt.

Weiterhin ist bei dem Ausführungsbeispiel der Figuren 14 und 15 optional die oben beschriebene Zwischen-Verbindungsstrebe 50 eingebaut, die den ersten und den zweiten aerodynamischen Körper zur Erhöhung der Sicherheit der Anordnung von aerodynamischen Körpern miteinander koppelt. Das eine Ende der Zwischenverbindungsstrebe 50 ist gelenkig an dem ersten aerodynamischen Körper A1 und das andere Ende gelenkig an der Spitze eines aus zwei Stabkörpern 60, 62 gebildeten Dreischlags befestigt, dessen Basis an der Stirnseite des gezeigten Rippenkörpers 4 des ersten aerodynamischen Körpers A1 liegt. 25 Diese Basis erstreckt sich hierbei zwischen zwei in Profiltiefen-Richtung voneinander beabstandeten Anschlusspunkten 60a bzw. 62a, an denen die zwei Stabkörper 60, 62 gelenkig mit der Stirnseite des ersten aerodynamischen Körperes A1 verbunden sind. Wie in der Figur 15 erkennbar ist, ragt die Spitze des Dreischlags durch eine in der Kopplungs-Rippe 3 vorgesehene Durchgangsöffnung 61 hindurch. Je nach Verschiebungsposition der Endkappe 12 kann sich die Spitze bzw. der dort befindliche Anschlusspunkt der Verbindungsstrebe 50 geringfügig durch die Durchgangsöffnung 61 hindurch in Richtung zur Stirnseite des ersten aerodynamischen Körpers A1 bzw. wieder aus der Durchgangsöffnung 61 heraus in Richtung zur Stirnseite des zweiten aerodynamischen Körpers A2 bewegen.

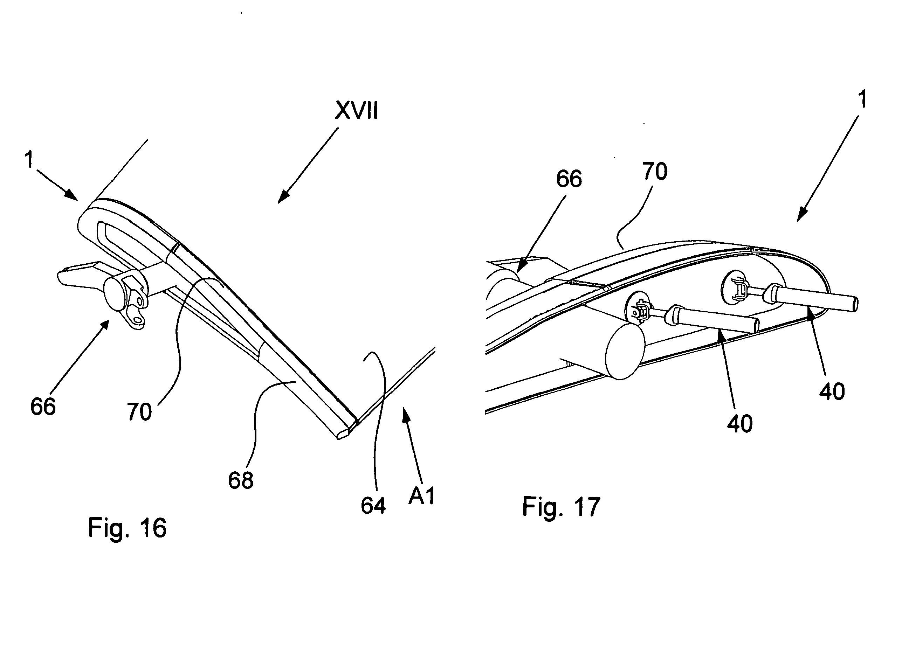

Die Figur 16 zeigt eine schematische, perspektivische Ansicht eines wesentlichen Teilbereichs einer erfindungsgemäßen Tragwerks-Anordnung oder Anordnung mit zumindest einem aerodynamischen Körper für ein Luftfahrzeug gemäß einer weiteren Ausführungsform. Diese Tragwerks-Anordnung ist aus zumindest einem ersten, beweglichen aerodynamischen Körper gebildet, der in diesem Ausführungsbeispiel als schwenkbare Klappe 64 ausgestaltet ist. Die Klappe 64, von der in den besagten Zeichnungen nur der stirnseitennahe Bereich dargestellt ist, ist mit einem aerodynamisch wirksamen Profil versehen und verfügt über eine vorbestimmte Spannweite. Die Klappe 64 ist mit ihrer in Spannweiten-Richtung weisenden Stirnseite über einen variablen Spalt (nicht gezeigt) hinweg neben einer Stirnseite eines in Bezug zu der Klappe 64 ortsfesten Strukturbauteils (nicht gezeigt), das ein Bauteil eines Rumpfes oder eines Tragflügels sein kann, angeordnet. Bei dem ortsfesten Strukturbauteil kann es sich beispielsweise um einen Rumpfkörper des Luftfahrzeugs oder einen Flügelanschlussbereich oder dergleichen handeln. Die Klappe 64 ist stimseitig über eine am Strukturbauteil befestigte Klappenlagerung 66 schwenkbar gehalten. Sie kann jedoch alternativ oder zusätzlich dazu auch an einem anderen Bauteil, z.B. an einem Tragflächenkörper, beweglich fixiert sein. Auch bei einer solchen Konfiguration können sich ähnlich wie bei den zuvor erläuterten Ausführungsbeispielen bei einer Bewegung der Klappe 64 die nebeneinander liegenden Stirnseiten der Klappe 64 und des Strukturbauteils relativ zueinander bewegen und dadurch die Größe und/oder Form des variablen Spaltes 25 verändern.

Zum Zwecke der Spaltabdichtung ist deshalb wiederum eine in Form einer Endkappe ausgestaltete Spalt-Überbrückungsvorrichtung 1 vorgesehen. Die Endkappe oder Spalt-Überbrückungsvorrichtung 1 übernimmt bei diesem aussführungsbeispiel bezogen auf die Profilform der Klappe die Spaltabdichtung im Nasen- bzw. Vorderkantenbereich, während die Abdichtung am Hinterkantenbereich mit einer konventionellen Dichtung erfolgt (siehe unten). Die Form der Endkappe oder Spalt-Überbrückungsvorrichtung 1 ist zumindest der Form des aerodynamischen Profils der Klappe 64 angepasst. Die Endkappe oder Spalt-Überbrückungsvorrichtung 1 ist wiederum an dem stirnseitigen Ende der Klappe 64 angeordnet und im Wesentlichen in Spannweiten-Richtung derselben teleskopartig an der Klappe 64 verschiebbar. Die Spalt-Überbrückungsvorrichtung 1 kann hierbei ähnlich wie in den obigen Beispielen in die Stirnseite eingefügt oder auf das stirnseitige Ende der Klappe 64 aufgesetzt oder auf eine andere geeignete Weise verschiebbar gelagert sein. Die Endkappe oder Spalt-Überbrückungsvorrichtung 1 ist mit der Stirnseite des benachbarten Strukturbauteils in Anlage bringbar und dichtet dadurch den variablen Spalt ab. Ein Teil der Klappenlagerung 66 erstreckt sich durch eine Öffnung in der Endkappe 12 hindurch.

Wie es in der Figur 17 veranschaulicht ist, die eine schematische Perspektivansicht der Tragwerks-Anordnung in Blickrichtung des Pfeils XVII in Figur 17 zeigt, umfasst die Tragwerks-Anordnung gemäß dieses Ausführungsbeispiels zwei Andrück-Vorrichtungen 40, die analog zu den in den Figuren 10 bis 13 dargestellten Ausführungsbeispielen gestaltet sein können und sicherstellen, dass die Spalt-Überbrückungsvorrichtung 1 bei jedem Verstellzustand der Klappe bzw. des aerodynamischen Körpers zuverlässig an die zugeordnete Stirnseite des benachbarten Strukturbauteils angedrückt wird und den variablen Spalt verschließt.

Zur Verbesserung der Spaltabdichtung kann die verschiebbare Endkappe oder Spalt-Überbrückungsvorrichtung 1 mit einem umlaufenden Stirnseiten-Dichtprofil 68 versehen (siehe Fig. 16). Dieses Dichtprofil 68 kann z.B. als Gummiformteil ausgebildet, das auf die Endkappe 12 oder Spalt-Überbrückungsvorrichtung 1 selbst oder, wie in dem in der Fig. 16 gezeigten Beispiel auf eine separate Trägerkappe 70 aufvulkanisiert ist, die den stirnseitigen Bereich der Spalt-Überbrückungsvorrichtung 1 bildet. Dieses Dichtprofil 68 legt sich durch die Wirkung der Andrück-Vorrichtungen oder Federschubeinheiten 40 in jeder Klappenstellung abdichtend an die Stirnseite des benachbarten Strukturbauteils bzw. an ein dort gegebenenfalls angeordnetes zweites Stirnseiten-Dichtprofil an. Ferner besitzt die Endkappe oder Spalt-Überbrückungsvorrichtung 1 ähnlich wie bei der Ausführungsform nach Fig. 10 umlaufende Dichtprofile 72 an ihrem Umfangsbereich bzw. am Außenflächenbereich der Klappe 64, so dass die Endkappe oder Spalt-Überbrückungsvorrichtung 1 auch beim Verschieben gegenüber der Klappe 64 abgedichtet ist.

Die Erfindung ist nicht auf die obigen Ausführungsbeispiele beschränkt, die lediglich der allgemeinen Erläuterung des Kerngedankens der Erfindung dienen. Die Merkmale oder Komponenten oder Teile von Ausführungsbeispielen lassen sich bei Anwendung von deren Grundfunktionen auch auf die anderen der beschriebenen Ausführungsformen anwenden. Je nach Anordnung der verwendeten aerodynamsichen Körper A1, A2 oder Tragwerkskomponenten und der Anbringung ihrer zugeordneten Bauteile kann der in der obigen Beschreibung und den Ansprüchen verwendete Begriff "erste" und zweite" aerodynamische Körper oder Tragwerkskomponente vertauscht werden.

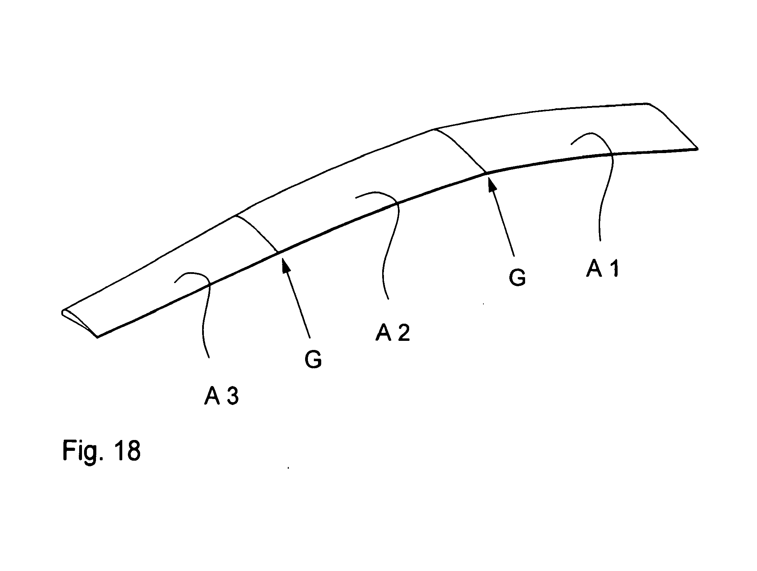

Die erfindungsgemäßen Gegenstände können auch die Anordnung von mehr als zwei aerodynamischen Körpern beinhalten, wie sie für den Fall von drei aerodynamischen Körpern in der Figur 18 dargestellt sind. Die drei aerodynamischen Körper können jeweils die beschriebenen Merkmale und insgesamt die genannten Merkmalskombinationen aufweisen.

Obwohl die erfindungsgemäße Tragwerks-Anordnung in den obigen Beispielen anhand von Landeklappen beschrieben wurde, kann sie natürlich auch in Verbindung mit anderen Tragwerkskomponenten wie z.B. Vorflügeln, Spoilern, Querrudem oder dergleichen realisiert werden. Diese Tragwerkskomponenten können hierbei insbesondere auch oszillierende (gleichgerichtete) Stellbewegungen (d.h. zum Beispiel Klappenschläge sowohl nach unten als auch oben) ausführen, wobei Effekte ähnlich zu den oben erläuterten auftreten, welche die Größe undloder Form des variablen Spaltes verändern.

Es ist zudem auch möglich, dass die Spalt-Überbrückungsvorrichtung 1 oder das Spaltverschlusselement bzw. die Endkappe mehrere teleskopartig ineinander schiebbare Profilteile mit beschriebenen Merkmalen besitzt. Ferner kann die Endkappe auch als ein im Wesentlichen in Spannweitenrichtung verschiebbares Vorsatzelement ausgestaltet werden, welches vor der Stirnseite der betreffenden TragwerksKomponente angeordnet wird. Bei einer solchen Lösung sind jedoch in der Regel weitere Dichtungs- oder Auskleidungselemente zwischen der Stirnseite und der Endkappe erforderlich.

Die oben beschriebenen Kopplungselemente können alternativ in Form beliebiger geeigneter kinematischer Getriebe ausgestaltet oder auch als seilförmige Elemente usw. ausgebildet sein. Anstelle der oben beschriebenen Kopplungselemente oder Federschubeinheiten sind grundsätzlich auch andere geeignete Stellantriebe für die Endkappe oder die Spalt-Überbrückungsvorrichtung oder das Spaltverschlusselement denkbar, so z.B. mechanische, elektrische, piezoelektrische, pneumatische oder hydraulische Antriebe oder dergleichen, sowie Mischformen daraus. In der Regel werden diese jedoch schwerer als die Kopplungselemente oder Federschubeinheiten ausfallen. Falls anstelle der Kopplungselemente ein separater Stellantrieb oder eine Federschubeinheit für das Verschieben der Endkappe oder die Spalt-Überbrückungsvorrichtung 1 verwendet wird, so können diese Antriebseinrichtungen z.B. auch an demjenigen aerodynamischen Körper angeordnet sein, welche die verschiebbare Endkappe nicht enthält (in Fig. 11 z.B. der erste areodynamische Körper A1), und die Endkappe z.B. in kinematischer Umkehr gegen die Stirnseite dieser Tragwerkskomponente ziehen.

Je nach Ausführungsform kann es auch von Vorteil sein, eine Führungseinrichtung für die Endkappe oder die Spalt-Überbrückungsvorrichtung mit mehr als zwei Führungselementen vorzusehen. Die optimale Anzahl der Führungselemente ist dabei insbesondere abhängig von den entsprechenden Abmessungen der jeweiligen Komponenten, den jeweiligen funktionalen Zusammenhängen und den Einbauverhältnissen.

Die im Rahmen der efindungsgemäßen Lösung verwendeten Dichtungs-Vorrichtungen oder -Elemente können entweder lösbar, d.h. manuell oder mit einfachen Montagewerkzeugen anbringbar und entfembar, oder unlösbar, d.h. nur durch Zerstören entfernbar, an dem betreffenden Bauteil angebracht sein. Eine unlösbare Anbringung kann z.B. durch Aufvulkanisieren der Dichtungs-Vorrichtung erfolgen.

## Patentansprüche

1. Tragflügel mit einem aerodynamischer Körper, der mittels einer Verstell-Vorrichtung gegenüber einem Hauptflügel eines Luftfahrzeugs verstellbar ist, wobei sich an einem seitlichen Ende (E1, E2) ein aufgrund der Verstellung desselben variabler Spalt (G) zwischen dem aerodynamischen Körper und einem weiteren aerodynamischen Körper oder einem Bauteil eines Rumpfes oder Hauptflügels ausbildet, aufweisend eine Spalt-Überbrückungsvorrichtung (1) mit einem Schalenteil (20), das sich entlang des Spalts (G) erstreckt und die Außenschale des aerodynamischen Körpers in Spannweiten-Richtung (SW1, SW2) an dessen Stirnseite derart überlappt, dass das Schalenteil (20) teleskopartig gegenüber diesem aerodynamischen Körper in Spannweiten-Richtung (SW1, SW2) bewegbar ist, wobei
die Spalt-Überbrückungsvorrichtung (1) eine mit dem Schalenteil (2) verbundene Kopplungs-Rippe (3) und eine Kopplungs-Vorrichtung (K1) zur Kopplung der Kopplungs-Rippe mit einem Strukturbauteil des aerodynamischen Körpers (A1) aufweist, **dadurch gekennzeichnet, dass** die Kopplungs-Rippe (3) einen Anschluss zur Ankopplung einer zweiten Kopplungs-Vorrichtung (K2) auf der entgegen gesetzten Seite der Kopplungs-Rippe (3) aufweist, wobei
die Kopplungs-Vorrichtung (K2) zumindest ein sich quer zur Flügeltiefen-Richtung (FT2) erstreckendes Verbindungsteil (6, 7) aufweist, das über eine Gelenk-Verbindung an die Kopplungs-Rippe (3) angekoppelt ist und das in seiner Längsrichtung zur Verschiebung des Schalenteils (20) in Spannweiten-Richtung (SW2) verlängerbar ist.

2. Tragflügel nach dem Anspruch 1, **dadurch gekennzeichnet, dass** das Schalenteil (12) außerhalb der Außenhaut (21, 22) des aerodynamischen Körpers (A1, A2) oder innerhalb der Außenhaut (21, 22) des aerodynamischen Körpers (A1, A2) gelegen ist.

3. Tragflügel nach einem der voranstehenden Ansprüche, **dadurch gekennzeichnet, dass** an der Spalt-Überbrückungsvorrichtung (1) eine Dichtungs-Vorrichtung (23) angeordnet ist.

4. Tragflügel nach dem Anspruch 3, **dadurch gekennzeichnet, dass** die Dichtungs-Vorrichtung (23) an derjenigen Seite der Spalt-Überbrückungsvorrichtung (1) angeordnet ist, die entgegengesetzt zu der Seite mit dem Überlappungsbereich gelegen ist, die dem Überlappungsbereich zugewandt ist.

5. Tragflügel nach dem Anspruch 3 oder 4, **dadurch gekennzeichnet, dass** die Dichtungs-Vorrichtung (23) in Bezug auf die Kopplungs-Rippe (3) an dem Schalenteil (20) und an derjenigen Seite angeordnet ist, die nahe des Überlappungsbereichs gelegen ist.

6. Tragflügel nach einem der voranstehenden Ansprüche, **dadurch gekennzeichnet, dass** die Kopplungs-Vorrichtung (K2) zur Kopplung der Kopplungs-Rippe (3) an einem der aerodynamischen Körper zumindest zwei in Flügeltiefen-Richtung (FT1, FT2) hintereinander angeordnete Lenker (4, 5) mit jeweils zwei Gelenken (4a, 4b; 5a, 5b) aufweist, die den Lenker (4, 5) an den aerodynamischen Körper (A1) und die Kopplungs-Rippe (3) anlenken.

7. Tragflügel nach einem der voranstehenden Ansprüche, **dadurch gekennzeichnet, dass** die Kopplungs-Vorrichtung (K1, K2) eine Andrück-Vorrichtung (40, 40a, 40b; 40a', 40b') zwischen einem tragenden Bauteil des aerodynamischen Körpers (A1, A2) und der Kopplungs-Rippe (3) aufweist, so dass die Andrück-Vorrichtung (40, 40a, 40b; 40a', 40b') die Spalt-Überbrückungsvorrichtung (1) nach außen von dem Inneren des aerodynamischen Körpers weg drückt.

8. Tragflügel nach Anspruch 7, **dadurch gekennzeichnet, dass** die Andrück-Vorrichtung (40, 40a, 40b; 40a', 40b') einen Teleskopstab aufweist, der in Richtung zur Außenseite des aerodynamischen Körpers vorgespannt ist.

9. Tragflügel für ein Luftfahrzeug mit einem Hauptflügel und einer Mehrzahl von quer zur Flügeltiefen-Richtung (S1) nebeneinander angeordneten aerodynamischen Körpern (A1, A2), die mittels einer Verstell-Vorrichtung gegenüber dem Hauptflügel verstellbar sind, wobei sich zwischen den einander zugewandten Enden der Außenschale der aerodynamischen Körper ein aufgrund der Verstellung derselben variabler Spalt (G) ausbildet, aufweisend eine Spalt-Überbrückungsvorrichtung (1) nach einem der Ansprüche 1 bis 8.

10. Tragflügel nach dem Anspruch 9, **dadurch gekennzeichnet, dass** die Spalt-Überbrückungsvorrichtung (1) aufweist:
• das Schalenteil (20), das sich am Spalt (G) zumindest abschnittsweise entlang der Kontur der Außenschalen der aerodynamischen Körper erstreckt,
• die mit dem Schalenteil (20) verbundene Kopplungs-Rippe (3),
• eine erste Kopplungs-Vorrichtung (K1) zur gelenkigen Kopplung der Kopplungs-Rippe (3) an einen ersten der aerodynamischen Körper (A1) und
• eine zweite Kopplungs-Vorrichtung (K2) zur gelenkigen Kopplung der Kopplungs-Rippe (3) an einem neben dem ersten aerodynamischen Körper (A1) gelegenen zweiten aerodynamischen Körper (A2).

11. Tragflügel nach einem der Ansprüche 9 oder 10, **dadurch gekennzeichnet, dass** die erste Kopplungs-Vorrichtung (K1) aus zwei in Spannweiten-Richtung (SW1) nebeneinander angeordneten Lenker-Verbindungen gebildet ist.

12. Tragflügel nach einem der Ansprüche 9, 10 oder 11, **dadurch gekennzeichnet, dass** die zweite Kopplungs-Vorrichtung aus dem in Spannweiten-Richtung (SW2) verlängerbaren Verbindungsteil (6, 7) gebildet ist, das in seiner Längsrichtung am zweiten aerodynamischen Körper geführt ist oder dass die zweite Kopplungs-Vorrichtung (K1, K2) eine Andrück-Vorrichtung (40, 40a, 40b; 40a', 40b') zwischen einem tragenden Bauteil des zweiten aerodynamischen Körpers (A2) und der Kopplungs-Rippe (3) aufweist, so dass die Andrück-Vorrichtung (40, 40a, 40b; 40a', 40b') die Spalt-Überbrückungsvorrichtung (1) nach außen von dem Inneren des zweiten aerodynamischen Körpers weg drückt.

13. Tragflügel nach einem der Ansprüche 10 bis 12, **dadurch gekennzeichnet, dass** auf dem ersten aerodynamischen Körper und dem zweiten aerodynamischen Körper jeweils eine teleskopartig auf dieser bewegbare Spalt-Überbrückungsvorrichtung (1) mit einer Kopplungs-Vorrichtung (K1, K2) angeordnet ist, die eine Andrück-Vorrichtung (40, 40a, 40b; 40a', 40b') zwischen einem tragenden Bauteil des zweiten aerodynamischen Körpers (A2) und der Kopplungs-Rippe (3) aufweist.

14. Tragflügel für ein Luftfahrzeug mit einem Hauptflügel und einer gegenüber diesem mittels einer Verstell-Vorrichtung verstellbaren und quer zur Flügeltiefen-Richtung (S1) neben einem Bauteil des Rumpfs oder des Hauptflügels angeordneten aerodynamischen Körper (A1, A2) mit einem aerodynamisch wirksamen Profil, wobei sich zwischen einem Enden der Außenschale des aerodynamischen Körpers und dem Bauteil des Rumpfs oder des Hauptflügels ein aufgrund der Verstellung derselben variabler Spalt (G) ausbildet, aufweisend eine Spalt-Überbrückungsvorrichtung (1) nach einem der Ansprüche 1 bis 8.

15. Tragflügel nach dem Anspruch 14, **dadurch gekennzeichnet, dass** die Spalt-Überbrückungsvorrichtung (1) aufweist:
• das Schalenteil (20), das sich am Spalt (G) zumindest abschnittsweise entlang der Kontur der Außenschalen der aerodynamischen Körper erstreckt,
• die mit dem Schalenteil (20) verbundene Kopplungs-Rippe (3),
• eine erste Kopplungs-Vorrichtung (K1) zur gelenkigen Kopplung der Kopplungs-Rippe (3) an einen den aerodynamischen Körper (A1) und
• eine zweite Kopplungs-Vorrichtung (K2) zur gelenkigen Kopplung der Kopplungs-Rippe (3) an das Bauteil.

16. Tragflügel nach einem der Ansprüche 14 oder 15, **dadurch gekennzeichnet, dass** die erste oder zweite Kopplungs-Vorrichtung aus zwei in Spannweiten-Richtung (SW1) nebeneinander angeordneten Lenker-Verbindungen gebildet ist.

17. Tragflügel nach einem der Ansprüche 12 bis 16, **dadurch gekennzeichnet, dass** die erste oder zweite Kopplungs-Vorrichtung aus dem in Spannweiten-Richtung (SW2) verlängerbaren Verbindungsteil (6, 7) gebildet ist, das in seiner Längsrichtung am zweiten aerodynamischen Körper oder am Bauteil geführt ist.

18. Tragflügel nach einem der Ansprüche 12 bis 17, **dadurch gekennzeichnet, dass** die erste oder zweite Kopplungs-Vorrichtung (K1, K2) eine Andrück-Vorrichtung (40, 40a, 40b; 40a', 40b') zwischen einem tragenden Bauteil des Bauteils oder des aerodynamischen Körpers (A2) und der Kopplungs-Rippe (3) aufweist, so dass die Andrück-Vorrichtung (40, 40a, 40b; 40a', 40b') die Spalt-Überbrückungsvorrichtung (1) nach außen von dem Inneren des aerodynamischen Körpers oder des Bauteils weg drückt.

19. Tragflügel nach einem der Ansprüche 14 bis 15, **dadurch gekennzeichnet, dass** auf dem ersten aerodynamischen Körper und dem Bauteil jeweils eine teleskopartig auf dieser bewegbare Spalt-Überbrückungsvorrichtung (1) mit einer Kopplungs-Vorrichtung (K1, K2) angeordnet ist, die eine Andrück-Vorrichtung (40, 40a, 40b; 40a', 40b') zwischen einem tragenden Bauteil des zweiten aerodynamischen Körpers (A2) und der Kopplungs-Rippe (3) aufweist.

20. Luftfahrzeug mit einem Tragflügel nach dem Anspruch 9 bis 19.

## Claims

1. An airfoil with an aerodynamic body that can be adjusted relative to a main wing of an aircraft by means of an adjusting device, wherein a gap (G) between the aerodynamic body and another aerodynamic body or a component of the fuselage or the main wing is formed on one lateral end (E1, E2) and said gap is variable due to the adjustment of the aerodynamic body, featuring a gap bridge-over device (1) with a shell part (20) that extends along the gap (G) and overlaps the outer shell of the aerodynamic body in the wingspread direction (SW1, SW2) on the front side thereof in such a way that the shell part (20) can be telescopically moved relative to this aerodynamic body in the wingspread direction (SW1, SW2), wherein the gap bridge-over device (1) features a coupling rib (3) that is connected to the shell part (2) and a coupling device (K1) for coupling the coupling rib to a structural component of the aerodynamic body (A1),
**characterized in that**
the coupling rib (3) features a connection for being coupled to a second coupling device (K2) on the opposite side of the coupling rib (3), wherein the coupling device (K2) features at least one connecting part (6, 7) that extends transverse to the chord direction (FT2), wherein said connecting part is coupled to the coupling rib (3) by means of an articulated connection and can be elongated in its longitudinal direction in order to displace the shell part (20) in the wingspread direction (SW2).

2. The airfoil according to Claim 1, **characterized in that** the shell part (12) is positioned outside the skin (21, 22) of the aerodynamic body (A1, A2) or positioned inside the skin (21, 22) of the aerodynamic body (A1, A2).

3. The airfoil according to Claim 1, **characterized in that** a sealing device (23) is arranged on the gap bridge-over device (1).

4. The airfoil according to Claim 3, **characterized in that** the sealing device (23) is arranged on the side of the gap bridge-over device (1) that lies opposite of the side with the overlapping region that faces the overlapping region.

5. The airfoil according to Claim 3 or 4, **characterized in that** the sealing device (23) is, referred to the coupling rib (3), arranged on the shell part (20) and on the side that is positioned near the overlapping region.

6. The airfoil according to one of the preceding claims, **characterized in that** the coupling device (K2) for coupling the coupling rib (3) to one of the aerodynamic bodies features at least two connecting rods (4, 5) that are arranged behind one another in the chord direction (FT1, FT2) and respectively provided with two articulations (4a, 4b; 5a, 5b) that couple the connecting rods (4, 5) to the aerodynamic body (A1) and the coupling rib (3).

7. The airfoil according to one of the preceding claims, **characterized in that** the coupling device (K1, K2) features a pressing device (40, 40a, 40b; 40a', 40b') between a supporting component of the aerodynamic body (A1, A2) and the coupling rib (3) such that the pressing device (40, 40a, 40b; 40a', 40b') presses the gap bridge-over device (1) outward and away from the interior of the aerodynamic body.

8. The airfoil according to Claim 7, **characterized in that** the pressing device (40, 40a, 40b; 40a', 40b') features a telescopic rod that is prestressed in the direction toward the outer side of the aerodynamic body.

9. An airfoil for an aircraft with a main wing and a plurality of aerodynamic bodies (A1, A2) that are arranged adjacent to one another transverse to the chord direction (S1) and can be adjusted relative to the main wing by means of an adjusting device, wherein a gap (G) is formed between the facing ends of the outer shell of the aerodynamic bodies and said gap is variable due to the adjustment of the aerodynamic bodies, featuring a gap bridge-over device (1) according to one of Claims 1 to 8.

10. The airfoil according to Claim 9, **characterized in that** the gap bridge-over device (1 ) features:
■ the shell part (20) that at least sectionally extends along the contour of the outer shells of the aerodynamic bodies at the gap (G),
■ the coupling rib (3) connected to the shell part (20),
■ a first coupling device (K1) for coupling the coupling rib (3) to a first of the aerodynamic bodies (A1) in an articulated fashion, and
■ a second coupling device (K2) for coupling the coupling rib (3) to a second aerodynamic body (A2) positioned adjacent to the first aerodynamic body (A1) in an articulated fashion.

11. The airfoil according to one of Claims 9 and 10, **characterized in that** the first coupling device is formed by two connecting rod links that are arranged adjacent to one another in the wingspread direction (SW1).

12. The airfoil according to one of Claims 9, 10 or 11, **characterized in that** the second coupling device is formed by the connecting part (6, 7) that can be elongated in the wingspread direction (SW2) and is guided in its longitudinal direction on the second aerodynamic body, or **in that** the second coupling device (K1, K2) features a pressing device (40, 40a, 40b; 40a', 40b') between a supporting component of the second aerodynamic body (A2) and the coupling rib (3) such that the pressing device (40, 40a, 40b; 40a', 40b') presses the gap bridge-over device (1) outward and away from the interior of the second aerodynamic body.

13. The airfoil according to one of Claim 10 to 12 , **characterized in that** a gap bridge-over device (1) with a coupling device (K1, K2) is respectively arranged on the first aerodynamic body and the second aerodynamic body and can be telescopically moved thereon, wherein said gap-bridge-over device features a pressing device (40, 40a, 40b; 40a', 40b') between a supporting component of the second aerodynamic body (A2) and the coupling rib (3).

14. An airfoil for an aircraft with a main wing and an aerodynamic body (A1, A2) with an aerodynamically active profile that can be adjusted relative to the main wing by means of an adjusting device and is arranged adjacent to a component of the fuselage or the main wing transverse to the chord direction (S1), wherein a gap (G) is formed between one end of the outer shell of the aerodynamic body and the component of the fuselage or the main wing and said gap is variable due to the adjustment of the aerodynamic body, featuring a gap bridge-over device (1) according to one of Claims 1 to 8.

15. The airfoil according to Claim 14, **characterized in that** the gap bridge-over device (1) features:
■ the shell part (20) that at least sectionally extends along the contour of the outer shells of the aerodynamic bodies at the gap (G),
■ the coupling rib (3) connected to the shell part (20),
■ a first coupling device (K1) for coupling the coupling rib (3) to one of the aerodynamic bodies (A1) in an articulated fashion, and
■ a second coupling device (K2) for coupling the coupling rib (3) to the component in an articulated fashion.

16. The airfoil according to one of Claims 14 or 15, **characterized in that** the first or second coupling device is formed by two connecting rod links that are arranged adjacent to one another in the wingspread direction (SW1).

17. The airfoil according to one of Claims 12 to 16, **characterized in that** the first or second coupling device is formed by the connecting part (6, 7) that can be elongated in the wingspread direction (SW2) and is guided in its longitudinal direction on the second aerodynamic body or on the component.

18. The airfoil according to one of Claims 12 to 17, **characterized in that** the first or second coupling device (K1, K2) features a pressing device (40, 40a, 40b; 40a', 40b') between a supporting component of the component or the aerodynamic body (A2) and the coupling rib (3) such that the pressing device (40, 40a, 40b; 40a', 40b') presses the gap bridge-over device (1) outward and away from the interior of the second aerodynamic body or the component.

19. The airfoil according to one of Claims 14 to 15, **characterized in that** a gap bridge-over device (1) with a coupling device (K1, K2) is respectively arranged on the first aerodynamic body and the component and can be telescopically moved thereon, wherein said gap bridge-over device features a pressing device (40, 40a, 40b; 40a', 40b') between a supporting component of the second aerodynamic body (A2) and the coupling rib (3).

20. An aircraft with an airfoil according to one of Claims 9 to 19.

## Revendications

1. Aile porteuse comprenant un corps aérodynamique réglable via un dispositif de réglage par rapport à l'aile principale d'un aéronef, sachant que sur une extrémité latérale (E1, E2), une fente (G) variable du fait du réglage de celle-ci, est formée entre le corps aérodynamique et un autre corps aérodynamique ou une pièce d'un fuselage ou de l'aile principale, présentant un dispositif pour combler la fente (1) avec une partie de coque (20) qui s'étend le long de la fente (G) et chevauche la coque extérieure du corps aérodynamique dans le sens d'envergure (SW1, SW2) sur sa face avant de telle sorte que la partie de coque (20) peut être déplacée de manière télescopique par rapport à ce corps aérodynamique dans le sens d'envergure (SW1, SW2), sachant que
le dispositif pour combler la fente (1) présente une nervure de couplage (3) reliée à la partie de coque (2) et un dispositif de couplage (K1) pour coupler la nervure de couplage (3) à une pièce structurelle du corps aérodynamique (A1), **caractérisée en ce que** la nervure de couplage (3) présente un raccordement pour coupler un deuxième dispositif de couplage (K2) sur le côté opposé de la nervure de couplage (3), sachant que le dispositif de couplage (K2) présente au moins une partie de liaison (6, 7) s'étendant transversalement au sens de la profondeur d'aile, qui est couplée à la nervure de couplage (3) via une liaison articulée et qui est modifiable dans son sens longitudinal pour déplacer la partie de coque (20) dans le sens d'envergure (SW2).

2. Aile porteuse selon la revendication 1, **caractérisée en ce que** la partie de coque (12) est située en-dehors de l'enveloppe extérieure (21, 22) du corps aérodynamique (A1, A2) ou à l'intérieur de l'enveloppe extérieure (21, 22) du corps aérodynamique (A1, A2).

3. Aile porteuse selon la revendication 1 ou 2, **caractérisée en ce qu'**un dispositif d'étanchéité (23) est disposé sur le dispositif pour combler la fente (1).

4. Aile porteuse selon la revendication 3, **caractérisée en ce que** le dispositif d'étanchéité (23) est agencé sur le côté du dispositif pour combler la fente (1) opposé au côté avec la zone de chevauchement, qui est tourné vers la zone de chevauchement.

5. Aile porteuse selon la revendication 3 ou 4, **caractérisée en ce que** le dispositif d'étanchéité (23) est agencé en rapport avec la nervure de couplage (3) sur la partie de coque (20) et sur le côté qui est proche de la zone de chevauchement.

6. Aile porteuse selon l'une des revendications précédentes, **caractérisée en ce que** le dispositif de couplage (K2) pour coupler la nervure de couplage (3) sur l'un des corps aérodynamiques, présente au moins deux guidons (4, 5) placés l'un derrière l'autre dans le sens de profondeur d'aile (FT1, FT2) comprenant respectivement deux articulations (4a, 4b ; 5a, 5b) qui guident le guidon (4, 5) sur le corps aérodynamique (A1) et la nervure de couplage (3).

7. Aile porteuse selon l'une des revendications précédentes, **caractérisée en ce que** le dispositif de couplage (K1, K2) présente un dispositif d'appui (40, 40a, 40b ; 40a', 40b') entre une pièce porteuse du corps aérodynamique (A1, A2) et la nervure de couplage (3), de telle sorte que le dispositif d'appui (40, 40a, 40b ; 40a', 40b') appuie le dispositif pour combler la fente (1) vers l'extérieur en l'éloignant de l'intérieur du corps aérodynamique.

8. Aile porteuse selon la revendication 7, **caractérisée en ce que** le dispositif d'appui (40, 40a, 40b ; 40a', 40b') présente une tige télescopique qui est précontrainte en direction du côté extérieur du corps aérodynamique.

9. Aile porteuse destinée à un aéronef comprenant une aile principale et une pluralité de corps aérodynamiques (A1, A1) disposés l'un à côté de l'autre transversalement au sens de profondeur d'aile (S1) qui peuvent être réglés via un dispositif de réglage par rapport à l'aile principale, sachant qu'entre les extrémités de la coque extérieure du corps aérodynamique tournées l'une vers l'autre, une fente (G) variable du fait du réglage de celle-ci est formée, présentant un dispositif pour combler la fente (1) selon l'une des revendications 1 à 8.

10. Aile porteuse selon la revendication 9, **caractérisée en ce que** le dispositif pour combler la fente (1) présente :
- la partie de coque (20) qui s'étend sur la fente (G) au moins par tronçons le long du contour des coques extérieures des corps aérodynamiques,
- la nervure de couplage (3) reliée à la partie de coque (20),
- un premier dispositif de couplage (K1) pour le couplage articulé de la nervure de couplage (3) sur un premier des corps aérodynamiques (A1), et
- un deuxième dispositif de couplage (K1) pour le couplage articulé de la nervure de couplage (3) sur un deuxième corps aérodynamique (A2) placé à côté du premier corps aérodynamique (Al).

11. Aile porteuse selon l'une des revendications 9 ou 10, **caractérisée en ce que** le premier dispositif de couplage (K1) est formé de deux liaisons par guidon disposées l'une à côté de l'autre dans le sens d'envergure (SW1).

12. Aile porteuse selon l'une des revendications 9, 10 ou 11, **caractérisée en ce que** le deuxième dispositif de couplage est formé de la partie de liaison (6, 7) pouvant être allongée dans le sens d'envergure (SW2), qui est guidée dans son sens longitudinal sur le deuxième corps aérodynamique ou que le deuxième dispositif de couplage (K1, K2) présente un dispositif d'appui (40, 40a, 40b ; 40a', 40b') entre une pièce porteuse du deuxième corps aérodynamique (A2) et la nervure de couplage (3), de telle sorte que le dispositif d'appui (40, 40a, 40b ; 40a', 40b') appuie le dispositif pour combler la fente (1) vers l'extérieur en l'éloignant de l'intérieur du deuxième corps aérodynamique.

13. Aile porteuse selon l'une des revendications 10 à 12, **caractérisée en ce qu'**un dispositif pour combler la fente (1) comprenant un dispositif de couplage (K1, K2) est disposé respectivement sur les premier et deuxième corps aérodynamique, en étant mobile de manière télescopique sur ceux-ci, lequel présente un dispositif d'appui (40, 40a, 40b ; 40a', 40b') entre une pièce porteuse du deuxième corps aérodynamique (A2) et la nervure de couplage (3).

14. Aile porteuse destinée à un aéronef comprenant une aile principale et un corps aérodynamique (A1, A2) réglable par rapport à celle-ci via un dispositif de réglage et disposé transversalement au sens de profondeur d'aile (S1) à côté d'une pièce du fuselage ou de l'aile principale, avec un profil actif aérodynamique, sachant qu'entre une extrémité de la coque extérieure du corps aérodynamique et la pièce du fuselage ou de l'aile principale, une fente (G) variable en raison du réglage de celle-ci se forme, présentant un dispositif pour combler la fente (1) selon l'une des revendications 1 à 8.

15. Aile porteuse selon la revendication 14, **caractérisée en ce que** le dispositif pour combler la fente (1) présente :
- la partie de coque (20) qui s'étend sur la fente (G) au moins par tronçons le long du contour des coques extérieures des corps aérodynamiques,
- la nervure de couplage (3) reliée à la partie de coque (20),
- un premier dispositif de couplage (K1) pour le couplage articulé de la nervure de couplage (3) sur un des corps aérodynamiques (A1), et
- un deuxième dispositif de couplage (K1) pour le couplage articulé de la nervure de couplage (3) sur la pièce.

16. Aile porteuse selon l'une des revendications 14 ou 15, **caractérisée en ce que** le premier ou le deuxième dispositif de couplage est formé de deux liaisons par guidon disposées l'une à côté de l'autre dans le sens d'envergure (SW1).

17. Aile porteuse selon l'une des revendications 12 à 16, **caractérisée en ce que** le premier ou le deuxième dispositif de couplage est formé de la partie de liaison (6, 7) pouvant être allongée dans le sens d'envergure (SW2) qui est guidée dans son sens longitudinal sur le deuxième corps aérodynamique ou la pièce.

18. Aile porteuse selon l'une des revendications 12 à 17, **caractérisée en ce que** le premier ou le deuxième dispositif de couplage (K1, K2) présente un dispositif d'appui (40, 40a, 40b ; 40a', 40b') entre une pièce porteuse de la pièce ou du corps aérodynamique (A2) et la nervure de couplage (3), de telle sorte que le dispositif d'appui (40, 40a, 40b ; 40a', 40b') appuie le dispositif pour combler la fente (1) vers l'extérieur en l'éloignant de l'intérieur du corps aérodynamique ou de la pièce.

19. Aile porteuse selon l'une des revendications 14 à 15, **caractérisée en ce qu'**un dispositif pour combler la fente (1) comprenant un dispositif de couplage (K1, K2) est disposé sur le premier corps aérodynamique et la pièce, en étant mobile de manière télescopique sur ceux-ci, lequel présente un dispositif d'appui (40, 40a, 40b ; 40a', 40b') entre une pièce porteuse du deuxième corps aérodynamique (A2) et la nervure de couplage (3).

20. Aéronef comprenant une aile porteuse selon les revendications 9 à 19.
